# EUROPÄISCHE PATENTSCHRIFT

(11) **EP 1 044 655 B1**
(45) Veröffentlichungstag und Bekanntmachung des Hinweises auf die Patenterteilung: **07.12.2005**
(21) Anmeldenummer: 00104318.1
(22) Anmeldetag: 02.03.2000
(51) Int. Cl.: A61C 1/07, A61C 1/08

(54) **Dentale Einrichtung zur Behandlung von Geweben mit vorzugsweise hochfrequenten mechanischen Schwingungen**
Dental device for the treatment of tissues with preferably high frequency mechanical oscillations
Dispositif dentaire pour le traitement des tissus préférablement avec oscillations mécaniques à haute fréquence

(30) Priorität: 11.04.1999 DE 19916153
(43) Veröffentlichungstag der Anmeldung: 18.10.2000
(73) Patentinhaber: Dürr Dental GmbH & Co. KG, 74321 Bietigheim-Bissingen (DE); Hahn, Rainer, Dr., 72074 Tübingen (DE)
(72) Erfinder: Hahn, Rainer, 72074 Tübingen (DE); Grotz, Uwe, 74369 Löchgau (DE); Prager, Ulrich, 74232 Abstatt (DE)
(74) Vertreter: Ostertag, Reinhard

(56) Entgegenhaltungen:
- EP-A- 0 323 598
- DE-A- 3 704 194
- DE-A- 4 406 323

## Beschreibung

Die Erfindung betrifft eine dentale Einrichtung zur Behandlung von Geweben mit vorzugsweise hochfrequenten mechanischen Schwingungen gemäß dem Oberbegriff des Anspruches 1.

In der EP 0 323 598 A ist ein Gerät zum Entfernen von Zahnstein und zum Spülen offenbart, welches ein Handstück mit einem durch eine Schwingungserzeugung angetriebenem Werkzeug aufweist. Ein Kanal zum Abgeben einer Arbeitsflüssigkeit endet in oder in der Nachbarschaft der Werkzeugspitze. Die Arbeitsflüssigkeit ist eine wässrige Lösung eines Wirkstoffes, wie er zur Behandlung von Paradontitis oder zum Behandeln von Plaque oder Karies verwendet wird. Diese Arbeitsflüssigkeit ist frei von Feststoffen.

Eine ähnliche Einrichtung, wie die oben angesprochene, ist in der DE 44 06 323 A1 offenbart.

Als Arbeitsflüssigkeit bei einer derartigen hochfrequenten Behandlung von Geweben, insbesondere zur Ultraschallbehandlung von Zahnhartgeweben ist oft eine wässrige Lösung einer Wirksubstanz oder eine Aufschlämmung sehr feiner abrasiver Partikel in Wasser. Derartige Arbeitsflüssigkeiten sind nicht stabil, da sich entweder Wirkstoff und Wasser entmischen oder sich Partikel im Wasser absetzen können. Die Arbeitsflüssigkeit muß daher jeweils kurz vor Gebrauch durch den Benutzer der Einrichtung hergestellt werden.

Wo in der vorliegenden Beschreibung und den Ansprüchen von Wasser gesprochen ist, sollen hierunter auch wässrige Lösungen verstanden werden, die zusätzliche Wirkstoffe enthalten, darunter solche, die medizinischen Zwecken oder der Desinfektion dienen oder auch solche, die zur Vorgabe spezifischer physikalischer, chemischer oder hygienischer Eigenschaften des Wassers dienen, z.B. die Vermischbarkeit mit den abrasiven Partikeln verbessern. Als Verdünnungslösungen für das Konzentrat, die mit unter Wasser verstanden werden soll, kommen insbesondere auch physiologische Kochsalzlösungen, Desinfektionslösungen (Chlorhexidin oder Alkohol). Fluorid-Lösungen und nekrotische Gewebe auflösende Lösungen (z.B. Natriumhypochlorit) in Betracht.

Durch die vorliegende Erfindung soll eine Einrichtung gemäß dem Oberbegriff des Anspruches 1 so weitergebildet werden, daß das unmittelbare Herstellen der Arbeitsflüssigkeit durch Verdünnen eines Konzentrates unmittelbar vor dem Anwendungsort mit Wasser automatisch erfolgt. Das Konzentrat kann den Wirkstoff in einer einzigen in sich stabilen Phase enthalten oder die abrasiven Partikel in einer wässrigen Lösung enthalten, die zusätzlich ein Verdickungsmittel enthält, welches einer Sedimentation entgegenwirkt.

Diese Aufgabe ist gelöst durch eine Einrichtung mit den im Anspruch 1 aufgeführten Merkmalen.

Die Anordnung der Mischeinrichtung für Konzentrat und Wasser im Handstück, wie sie in Anspruch 1 angegeben ist, ermöglicht es, die Arbeitsflüssigkeit erst unmittelbar vor dem Anwendungsort zu mischen. Damit kann das Handstück über einen längeren Schlauch mit einer Versorgungseinheit verbunden werden, ohne daß sich im Inneren dieses Schlauches eine Phasentrennung abspielt.

Vorteilhafte Weiterbildungen der Erfindung sind in Unteransprüchen angegeben.

Eine Mischeinrichtung, wie sie im Anspruch 2 angegeben ist, zeichnet sich durch mechanisch besonders einfachen und strömungsmäßig besonders günstigen Aufbau aus.

Dabei hat man bei der im Anspruch 3 angegebenen Geometrie besonders kompakte Abmessungen der Mischeinrichtung, welche sich besonders gut in ein schlankes Handstück integrieren läßt. Die Durchmischung von Konzentrat und Wasser ist gut, auch wenn die zu mischenden Volumina nur klein sind.

Mit der Weiterbildung der Erfindung gemäß Anspruch 4 wird erreicht, daß die Mischeinrichtung gleichermaßen für unterschiedliche Handstücke verwendet werden kann, die mit Arbeitsflüssigkeit zu versorgen sind.

Bei einer Einrichtung gemäß Anspruch 5 ist gewährleistet, daß nach Abnahme des eigentlichen Handstückes vom am Ende des Gehäuses vorgesehenen Steckverbinderteil keine Flüssigkeit austritt.

Die Weiterbildung der Erfindung gemäß Anspruch 6 hat den Vorteil, daß sich in den Abgabemitteln keine Entmischung der Arbeitsflüssigkeit abspielt.

Bei dentalen Handstücken ist es generell wünschenswert, wenn das Werkzeug ähnlich wie bei herkömmlichen Bohrer-Handstücken mit seiner Achse senkrecht zur Längsachse des Handstückes verläuft. Hierzu kann man bei mit Ultraschall (oder auch Schall) betriebenen Ultraschall-Handstücken einen Koppelkörper vorsehen, der die Schallenergie von der Handstückachse auf eine hierzu geneigte, vorzugsweise unter 90° geneigte Werkzeugachse umlenkt. Ein derartiger Koppelkörper muß zwangsläufig in der Regel gewisse Abmessungen haben. Von diesen Abmessungen kann man gemäß Anspruch 7 auch dazu Gebrauch machen, dort die Abgabemittel für die Arbeitsflüssigkeit vorzusehen. Die Abgabemittel sind so mit dem Werkzeug eng benachbart und werden zugleich wie das Werkzeug mit Schallenergie beaufschlagt.

Mit der Weiterbildung der Erfindung gemäß Anspruch 8 wird erreicht, daß die Arbeitsflüssigkeit auch auf dem Weg zwischen der Mischeinrichtung und dem Abgabemittel mit Schall beaufschlagt ist und sich daher nicht entmischt.

Die Weiterbildung der Erfindung gemäß Anspruch 9 ist dabei deshalb besonders vorteilhaft, weil man keine gesonderte Leitung für die Arbeitsflüssigkeit benötigt. Dadurch kann das Handstück insgesamt in radialer Richtung besonders kompakt bauen. Durch die zentrale Anordnung des Speisekanales in den verschiedenen schalleitenden Elementen des Handstückes wird erreicht, daß der Speisekanal zu keinen Unsymmetrien im Schallfeld führt.

Gemäß Anspruch 10 kann auch eine für den Schwingungsgenerator vorgesehene Gegenmasse einen Teil des die Arbeitsflüssigkeit zu den Abgabemitteln führenden Kanales bilden.

Bei einer Einrichtung gemäß Anspruch 11 ist zwangsweise sichergestellt, daß die Arbeitsflüssigkeit auf das Werkzeug geleitet wird.

Die Weiterbildung der Erfindung gemäß Anspruch 12 ermöglicht eine sichere und präzise Anbringung eines Düsenkörpers am Handstück, ohne daß man sehr kleine paßgenau zusammenarbeitende Gewinde herstellen müßte.

Bei einer Einrichtung gemäß Anspruch 13 kann man die Menge der erzeugten Arbeitsflüssigkeit genau auf den Bedarf einstellen. Auch ist eine gute Konstanz der Zusammensetzung der Arbeitsflüssigkeit gewährleistet.

Geht man gemäß Anspruch 14 vor, hat man Dosierpumpen, welche mechanisch einfach bauen, selbstansaugend sind und auch gut mit abrasiven Flüssigkeiten zusammenarbeiten können.

Gemäß Anspruch 15 werden sehr kleine Volumina von Konzentrat und Wasser miteinander in kurz aufeinander folgenden Abständen gemischt. Auf diese Weise kann man der Tatsache Rechnung tragen, daß die Arbeitsflüssigkeit an sich am Arbeitsort nicht verbraucht wird, vielmehr nur der Verlust an die Umgebung zu ersetzen ist. Durch die intermittierende Erzeugung und Abgabe von Arbeitsflüssigkeit kann man im zeitlichen Mittel sehr geringe Absolutmengen von Arbeitsflüssigkeit bereitstellen (im zeitlichen Mittel 4 bis 5 ml pro Minute), und trotzdem ist gewährleistet, daß die Arbeitsflüssigkeit durch intensives Mischen von Konzentrat und Wasser zustandekommt und bei Verwendung von Düsen in einem definierten Strahl dem Werkzeug zugeführt wird. Erst dann, wenn die Arbeitsflüssigkeit, die auf das Werkzeug gegeben worden ist, verbraucht ist (typischerweise nach größenordnungsgemäßig einer Sekunde) wird wieder ein neuer Zyklus der Herstellung und Abgabe von Arbeitsflüssigkeit eingeleitt.

Die Weiterbildung der Erfindung gemäß Anspruch 16 hat ein scharfes Beenden der Abgabe von Wasser und Konzentrat an die Mischeinrichtung als Vorteil. Ein Nachtropfen von Flüssigkeit und Konzentrat ist ausgeschlossen.

Die Weiterbildung der Erfindung gemäß Anspruch 17 gestattet es, die intermittierend bereiteten Volumina an Arbeitsflüssigkeit als scharfen Strahl abzugeben und auf die Außenfläche des Werkzeuges zu spritzen. Dabei bleibt der mittlere Verbrauch an Arbeitsflüssigkeit klein, so daß keine besonderen Maßnahmen bezüglich des Absaugens verbrauchter Flüssigkeit aus dem Mund des Patienten getroffen zu werden brauchen. Auch sind die Sichtverhältnisse zur Arbeitsstelle im Mittel gut.

Mit der Weiterbildung der Erfindung gemäß Anspruch 18 wird erreicht, daß die zu mischenden Flüssigkeiten im wesentlichen gleichzeitig in die Mischeinrichtung eintreten, obwohl viskösere Flüssigkeiten in den im Hinblick auf die Handhabbarkeit des Handstückes dünn gewählten Versorgungsschläuchen gegenüber höheren Bewegungswiderstand bewegt werden müssen. Der höhere Bewegungswiderstand führt auch dazu, daß die für das Konzentrat verwendete flexible Verbindungsleitung zwischen Versorgungsgerät und Handstück einem stärkeren Druckaufbau ausgesetzt ist als die das niedervisköse Wasser führende flexible Leitung, so daß sich die das Konzentrat führende Leitung etwas stärker elastisch aufweitet als die wasserführende Leitung, was einen weiteren Beitrag zur Verzögerung des Konzentrates gegenüber dem Wasser führt, der durch vorgezogenes Einschalten der Dosierpumpe für das Konzentrat kompensiert werden kann.

Mit der Weiterbildung der Erfindung gemäß Anspruch 19 wird erreicht, daß die zwischen der Mischeinrichtung und den Abgabemitteln liegende Leitung beim Abschalten des Handstückes durchgespült wird, so daß sie nicht durch Ausfallen von Komponenten der Arbeitsflüssigkeit verstopfen kann.

Mit der Weiterbildung der Erfindung gemäß Anspruch 20 wird erreicht, daß beim Einschalten des Handstückes die zwischen der Mischeinrichtung und den Abgabemitteln liegende Leitung vollständig neu mit neu zubereiteter Arbeitsflüssigkeit gefüllt wird.

Gemäß Anspruch 21 erhält man auf einfache Weise einen hygienisch einwandfreien dichten Anschluß eines Vorratsbehälters. Die dichte Verbindung ermöglicht es, den Inhalt des Vorratsbehälters abzusaugen, so daß man für das Leeren des Vorratsbehälters nicht auf die Schwerkraft angewiesen ist. Dies ermöglicht es, den Vorratsbehälter auch liegend oder nur wenig geneigt vorzusehen, und dadurch resultiert eine geringe Bauhöhe der Versorgungseinheit der Einrichtung incl. der in ihr angeordneten Vorratsbehälter.

Die Weiterbildung der Erfindung gemäß Anspruch 22 ermöglicht es, auf einfache Weise die Entnahmekanülen und die sich an sie anschließenden Leitungen mit Wasser durchzuspülen.

Die Weiterbildung der Erfindung gemäß Anspruch 23 dient einer einfachen Bewegbarkeit der Entnahmekanülen durch den Benutzer.

Die Weiterbildung der Erfindung gemäß Anspruch 24 ist im Hinblick darauf vorteilhaft, daß man die gesamte Behandlungseinrichtung nicht an das Frischwassernetz anzuschließen braucht. Damit können zahnärztliche Arbeitsplätze mit der erfindungsgemäßen Behandlungseinrichtung nachgerüstet werden, ohne daß an dem Arbeitsplatz selbst Änderungen durchgeführt zu werden bräuchten. Da die erfindungsgemäße Behandlungseinrichtung mit sehr geringen Mengen an Arbeitsflüssigkeit auskommt, damit auch nur geringe Mengen Wassers benötigt, reicht ein kleiner Wasservorratsbehälter von einigen hundert ml für lange Behandlungszeiten aus.

Wie eingangs dargelegt kann man zum Verdünnen von Konzentrat gleichermaßen auch eine wässrige Lösung eines oder mehrerer Wirkstoffen verwenden. Diese können dem im gemäß Anspruch 24 vorgesehenen Wasser-Vorratsbehälter befindlichen Wasser bequem von Hand zugegeben werden.

Mit der Weiterbildung der Erfindung gemäß Anspruch 25 wird erreicht, daß eine elektrische Anzeige dann erfolgt, wenn der Inhalt des Wasserbehälters zur Neige geht.

Anspruch 26 gibt eine besonders einfache Ausführungsform einer elektrischen Waage an, auf welcher der Wasserbehälter steht.

Mit der Weiterbildung der Erfindung gemäß Anspruch 27 wird erreicht, daß sich ein Ansaugstück, über welches dem Wasserbehälter Wasser entnommen wird, automatisch aus dem Wasserbehälter entfernt, wenn der zum Entnehmen des Wasserbehälters aus dem Gehäuse der Versorungseinheit vorgesehene Deckel angehoben wird.

Bei einem Wasserbehälter, der gemäß Anspruch 28 ausgebildet ist, ist die Gefahr reduziert, daß Wasser aus dem Behälter schwappt, wenn dieser von einem Wasserhahn zur Behandlungseinrichtung getragen wird.

Bei einer Behandlungseinrichtung gemäß Anspruch 29 sind die Vorratsbehälter am Gehäuse der Versorgungseinheit der Behandlungseinrichtung präzise so positioniert, daß die lichte Kontur von Versorgungseinheit und Vorratsbehältern klein ist.

Bei einer Behandlungseinrichtung mit in der Nachbarschaft des Werkzeuges angebrachten Abgabemitteln für die Arbeitsflüssigkeit ist der Düsenkörper zwangsweise auch einer Spannzange benachbart, mit welcher das Werkzeug am Handstück festgemacht wird. Ein Schraubwerkzeug zum Lösen und Festziehen eines Düsenkörpers, wie es im Anspruch 30 angegeben ist, kann "um die Werkzeug-Spannzange herum" mit dem Düsenkörper zusammenarbeiten.

Dabei wird mit der Weiterbildung der Erfindung gemäß Anspruch 31 erreicht, daß der Düsenkörper nicht übermäßig stark aber ausreichend stark im Ende des Abgabekanales für die Arbeitsflüssigkeit angebracht wird und sich zuverlässig auch aus dem Ende des Abgabekanales wieder herausdrehen läßt.

Die Weiterbildung der Erfindung gemäß Anspruch 32 ermöglicht es, einen Vorrat an neuen Düsenkörpern im zu deren Eindrehen dienenden Schraubwerkzeug zu halten.

Die Weiterbildung der Erfindung gemäß Anspruch 33 ermöglicht ein einfaches Auswechseln eines zwischen den Schwingungserzeuger und das Werkzeug eingefügten Koppelkörpers, der in der Regel dazu dient, die Schallenergie von der Handstückachse auf eine hierzu gekippte Werkzeugachse umzulenken. Zugleich ist eine gute schwingungsmäßige Verbindung zum Koppelkörper gewährleistet.

Gemäß Anspruch 34 ist zwangsweise gewährleistet, daß der Koppelkörper eine vorgegebene Winkelstellung bezüglich der Achse des Handstückes einnimmt. Dies ist insbesondere dann wichtig, wenn der Koppelkörper unter geringem Abstand von einem Abdeckteil umgeben ist.

Gemäß Anspruch 35 kann die Spannzange für das Koppelstück zugleich eine Flüssigkeitskupplung für über das Koppelstück zum Werkzeug geführtes Arbeitsfluid bilden.

Nachstehend wird die Erfindung anhand eines Ausführungsbeispieles unter Bezugnahme auf die beiliegende Zeichnung näher erläutert. In dieser zeigen:

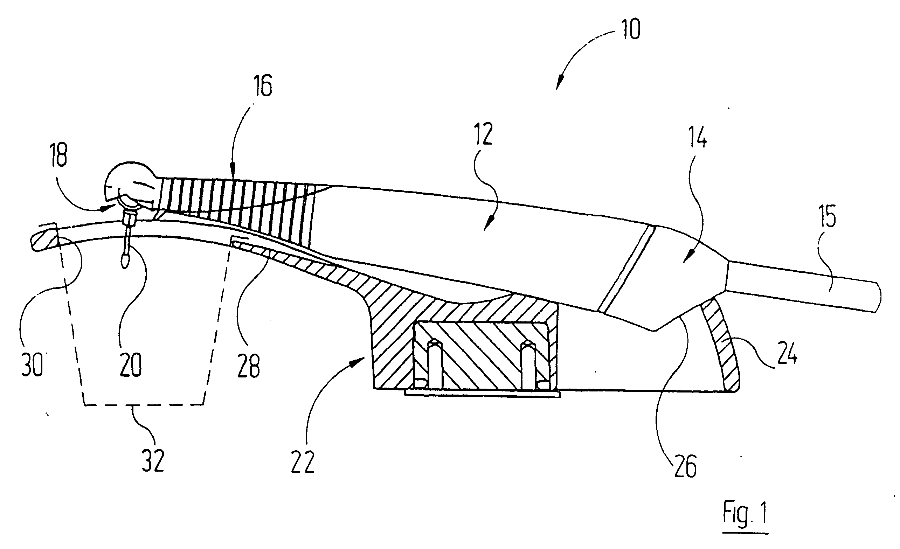

- Figur 1:: eine seitliche Ansicht eines dentalen und Ultraschallhandstückes abgelegt auf einer in der Längsmittelebene geschnitten dargestellten Ablage;
- Figur 2:: einen axialen Schnitt durch das Ultraschallhandstück nach Figur 1;
- Figur 3:: einen axialen Schnitt durch ein Gehäusehauptteil des Handstückes nach den Figuren 1 und 2;
- Figur 4:: eine seitliche Ansicht eines Funktionseinsatzes des Ultraschallhandstückes;
- Figur 5:: einen axialen vergrößerten Schnitt durch den dem Werkzeug benachbarten Endabschnitt des Ultraschallhandstückes, in welchem insbesondere eine Werkzeug-Spannzange und eine KoppelstückSpannzange des Ultraschallhandstückes näher gezeigt sind;
- Figur 6:: einen axialen Schnitt durch die Funktionsteile einer Steckkupplung, über welche das Ultraschallhandstück mit einem Versorgungsschlauch verbunden wird.
- Figur 7:: eine schematische Darstellung des in den Figuren 1 bis 6 gezeigten Handstückes zusammen mit einer Versorgungseinheit;
- Figur 8:: eine perspektivische Ansicht eines praktischen Ausführungsbeispieles der Versorgungseinheit und des Ultraschallhandstückes, wobei Gehäuseteile so dargestellt sind, wie wenn sie aus durchsichtigem Material gefertigt wären;
- Figur 9:: einen vertikalen Schnitt durch die in Figur 8 gezeigte Versorgungseinheit längs der dortigen Schnittlinie IX-IX;
- Figur 10:: einen ähnlichen Schnitt wie Figur 9, wobei jedoch der dort gezeigte Vorratsbehälter entnommen ist und eine Entnahmekanüle in eine Spülstellung bewegt worden ist;
- Figur 11:: einen vergrößerten Ausschnitt aus Figur 10, in welchem Einzelheiten der Entnahmekanüle und ihrer Umgebung wiedergegeben sind;
- Figur 12:: einen transversalen Schnitt durch einen vorderen Abschnitt der Versorgungseinheit von Figur 8 längs der dortigen Schnittlinie XII-XII in vergrößertem Maßstabe;
- Figur 13:: einen axialen Schnitt durch ein Werkzeug zum Herausdrehen und Festziehen eines Düsenkörpers des Ultraschall-Handstückes; und
- Figur 14:: eine axialen Schnitt durch einen Düsenkörper des Handstückes und seine direkte Umgebung.

In der Zeichnung ist mit 10 insgesamt ein dentales Ultraschallhandstück bezeichnet. Es umfaßt ein Gehäusehauptteil 12, ein hinteres steckbares Gehäuseendteil 14, von welchem ein Versorgungsschlauch 15 ausgeht, sowie ein vorderes Abdeckteil 16, welches einen Koppelkörper 18 umgibt, der ein Schallwerkzeug 20 trägt.

Das Ultraschallhandstück 10 ist auf einer insgesamt mit 22 bezeichneten Ablage abgelegt. Letztere hat in zur Zeichenebene senkrechter Richtung geschnitten die Form einer Mulde, die etwas weiter geöffnet ist, als es der Umfangskrümmung des Schallhandstückes 10 entspricht. Im rückwärtigen Teil hat die Ablage 22 eine Stützrippe 24, die mit einer schrägen Stützfläche 26 des Gehäuseendteiles 14 zusammenarbeitet. In einem auskragenden Abschnitt 28 der Ablage 22 ist eine Öffnung 30 vorgesehen, durch welche das Ultraschallwerkzeug 20 hindurchragt und in welche ein bei 32 gestrichelt angedeuteter Behälter eingesetzt werden kann, um beim Spülen des Ultraschallhandstückes anfallende Flüssigkeit aufzufangen.

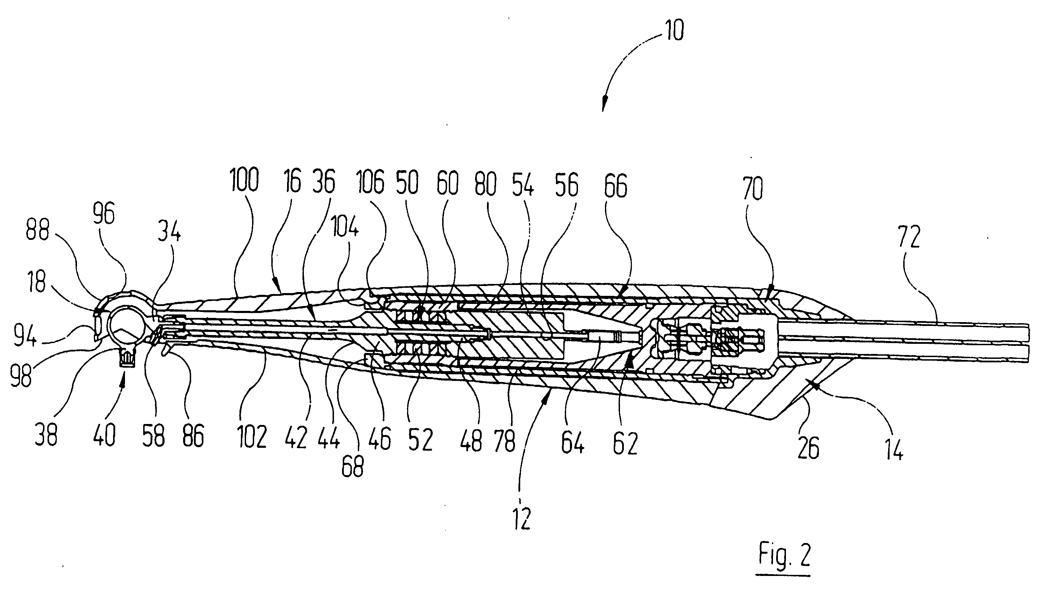

Figur 2 zeigt Einzelheiten des inneren Aufbaus des Ultraschallhandstückes.

Der Koppelkörper 18 ist als zylindrischer Ring ausgebildet und hat am einen, in Figur 2 rechts gelegenen Ende einen Anschlußabschnitt 34, der auf das Ende einer Sonotrode 36 aufgeschraubt ist. Gegen den Anschlußabschnitt 34 um 90° versetzt ist ein zweiter, in der Zeichnung nach unten weisender Anschlußabschnitt 38 vorgesehen, der eine Spannzange 40 trägt, in welcher ein Ultraschallwerkzeug 20 festspannbar ist.

Die Sonotrode 36 hat einen in der Zeichnung links gelegenen längeren Sonotrodenabschnitt 42, der sich frei durch den im wesentlichen kegelförmigen Raum erstreckt, der durch das Gehäusehauptteil 12 und das Abdeckteil 16 begrenzt ist. Auf den Sonotrodenabschnitt 42 folgt über einen kegelförmigen Übergangsabschnitt 44 ein mittlerer größeren Durchmesser aufweisender Sonotrodenabschnitt 46, an den sich in der Zeichnung rechts wiederum ein verminderten Durchmesser aufweisender Sonotrodenabschnitt 48 anschließt. Letzterer trägt in seinem linken Abschnitt ein Paket 50 aus piezoelektrischen Scheiben 52, die miteinander axial verspannt sind. Der in der Zeichnung rechts gelegene Teil des Sonotrodenabschnittes 48 ist mit einer Gegenmasse 54 verbunden, die auf dieses Sonotrodenende aufgeschraubt ist und so zugleich die axiale Vorspannung für das Scheibenpaket 50 erzeugt.

Durch die gesamte Sonotrode 36 und die auf diese aufgeschraubte Gegenmasse erstreckt sich ein Fluidkanal 56. Dieser steht an seinem dem Koppelkörper 18 benachbarten Ende mit einem Düsenkörper 58 in Verbindung, dessen Achse so geneigt ist, daß der vom Düsenkörper 58 abgegebene Fluidstrahl in einen mittleren oder vorderen Bereich eines in die Spannzange 40 eingesetzten Ultraschallwerkzeuges trifft.

Die Position, Neigung und insbesondere die Länge des Düsenkörpers 58 ist wichtig. Der von ihm abgegebene Strahl soll sich nicht durch Oszillationen des Düsenkörpers aufweiten.

Das Scheibenpaket 50 ist von einer elektrischen Isoliermasse 60 umspritzt, bei der sich um eine Silikonmasse handeln kann.

Die Gegenmasse 54 ist von einem becherähnlichen Einsatz 62 umgeben. Dieser ist im in der Zeichnung rechts gelegenen Teil als Steckverbinderteil ausgebildet, welches einen Fluid-Steckkontakt zum Anschluß des Fluidkanales 56 über ein Schlauchstück 64 und elektrische Kontakte zur Spannungsbeaufschlagung des piezoelektrischen Scheibenpaktes 50 aufweist.

Die oben beschriebenen Teile sind durch ein angespritztes Funktionsgehäuse 66 zusammengehalten, welches an seinem dem Kopf des Handstückes zugewandten Ende einen radial nach innen kragenden Flansch 68 aufweist.

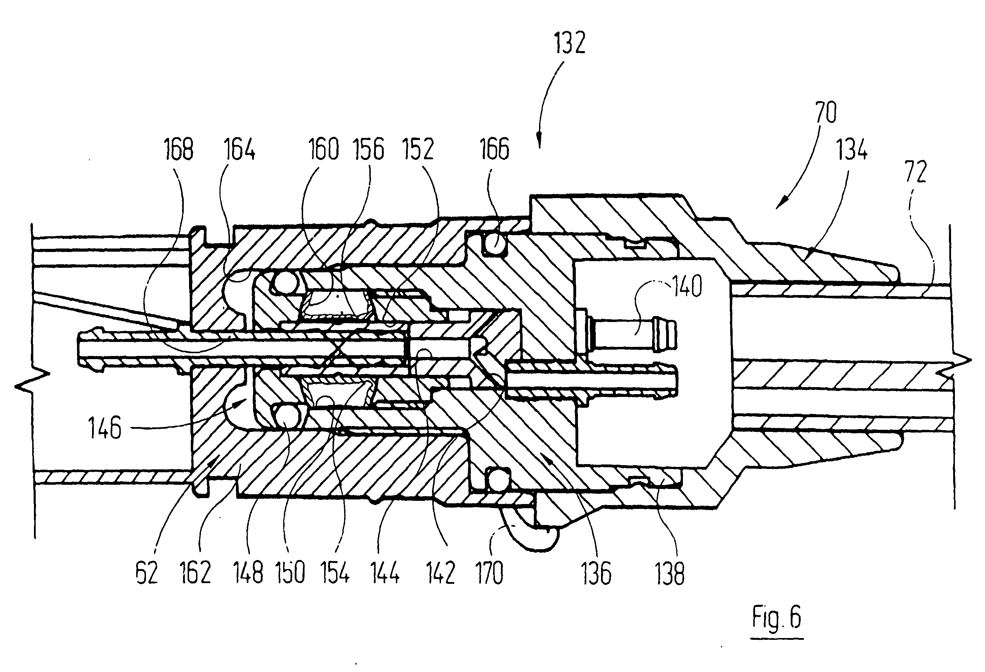

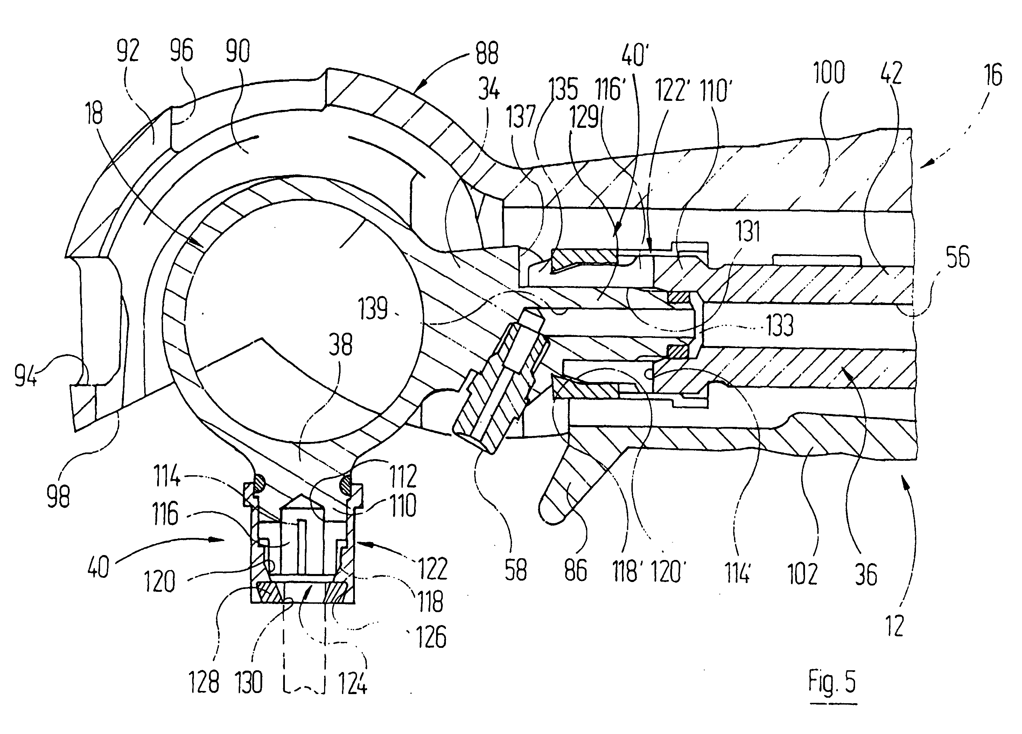

In das Gehäuseendteil 14 ist ein Steckverbinderteil 70 integriert, welches zu den Kontakten des am Ende des Einsatzes 62 ausgebildeten Steckverbinderteiles passende komplementäre Kontakte aufweist und später unter Bezugnahme auf*Figur 6 noch genauer beschrieben wird. Ein vom Gehäuseendteil getragenes Knickschutzteil 72 schützt in*Figur 2 nicht dargestellte elektrische Leiter und Fluid-Schläuche gegen starke Knickbelastungen beim Austritt aus dem Schallhandstück.

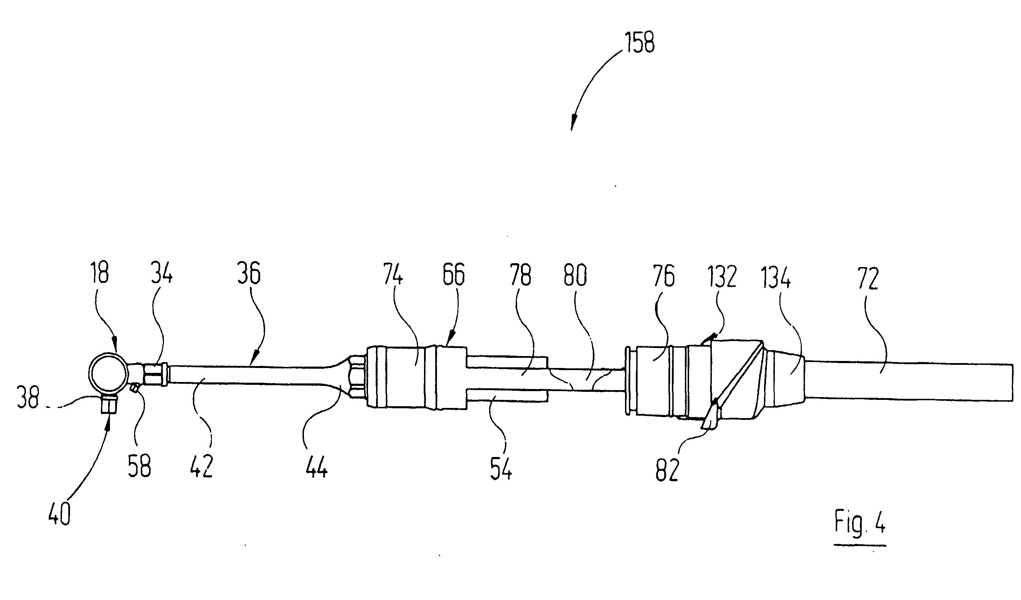

Wie aus Figur 4 ersichtlich ist, hat das Funktionsgehäuse 66 zwei im wesentlichen rotationssymmetrische Gehäuseabschnitte 74, 76, die durch zwei einander bezüglich der Gehäuseachse gegenüberliegende parallele axiale Arme 78, 80 zu einer Einheit verbunden sind.

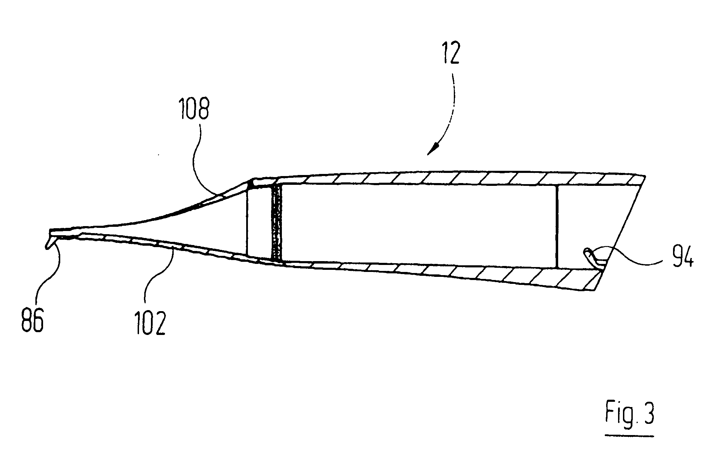

Der hintere Gehäuseabschnitt 76 hat eine kurze Gewinderippe 82, die mit einer komplementären Gewindenut 84 (vergleiche Figur 3) des Gehäusehauptteils 12 zusammenarbeitet, um das Funktionsgehäuse 66 lösbar mit dem Gehäusehauptteil 12 zu verbinden. Die Abnehmbarkeit des Gehäusehauptteiles 12 bei abgezogener Steckverbindung erleichtert das Reinigen der Handstück-Komponenten erheblich.

Beim freien Ende des Gehäusehaupteiles 12 ist eine nach unten hängende Abdecklippe 86 angeformt, deren Schrägstellung der Anstellung der Achse des Düsenkörpers 58 entspricht. Die Abdecklippe 86 dient dazu Mundgewebe, insbesondere die Lippen des Patienten, vom Koppelkörper 18 und/oder der Öffnung des Düsenkörpers 58 fernzuhalten. Auf diese Weise wird ein unbeabsichtigtes Verlegen des Düsenkörpers 58 durch bewegliche orale Weichgewebe verhindert. Die Abdecklippe 86 verhindert auch, daß sich Nebel des Arbeitsfluids von der Düsenaustrittsöffnung in seitlicher Richtung wegbewegen und dient zugleich als Abtropfleiste.

Wie aus den Figuren 2 und 5 ersichtlich, hat das Abdeckteil 16 einen Kappenabschnitt 88, welcher den ringförmigen Koppelkörper 18 umgibt und die Form einer beidseitig abgeplatteten Kugel bzw. die Form einer Dose mit bombierter Umfangswand haben kann. Ebene Stirnflächen 90 des Kappenabschnittes 88 liegen unter kleinem Abstand (in der Praxis 0,2 bis 0,8 mm, vorzugsweise 0,4 mm) vor den ringförmigen Stirnflächen des Koppelkörpers 18. Die bombierte Umfangswand 92 des Kappenabschnittes 88 umgibt den Koppelkörper 18 unter größerem Abstand, z.B. 1 bis 4 mm, vorzugsweise etwa 2 mm.

In der Umfangswand 92 sind in Verlängerung der Achse des Gehäusehauptteiles 12 bzw. im oberen Abschnitt Wandöffnungen 94, 96 vorgesehen. Diese dienen zum einen dazu, daß sich zwischen der Außenfläche des Koppelkörpers 18 und der Innenfläche der Umfangswand 92 kein gefangenes Gas- und/oder Flüssigkeitsvolumen (Druckpolster) aufbaut, welches die Schwingungen des Koppelkörpers beeinträchtigen könnte. Zugleich dienen die Wandöffnungen 94, 96 als Ablauföffnungen, durch welche etwa ins Innere des Kappenabschnittes 88 gelangendes Arbeitsfluid abfließen kann bzw. vom Koppelkörper 18 abgeschleudert werden kann.

Am in der Zeichnung unten liegenden Ende hat der Kappenabschnitt 88 eine wie dargestellt abgewinkelte Ausnehmung 98, durch welche der unterste Abschnitt des Koppelkörpers 18, die Spannzange 40 und ein von letzterer getragenes Ultraschallwerkzeug nach außen überstehen.

Die Größe der Wandöffnungen 94, 96 ist so bemessen, daß unter den im Betrieb auftretenden Arbeitsbedingungen keine Weichgewebeteile des Patienten und auch kein Finger in Berührung zur Außenfläche des Koppelkörpers 18 kommt.

Wie aus den Figuren 2 und 3 ersichtlich hat das Abdeckteil 16 einen sich an den Kappenabschnitt 88 anschließenden Halsabschnitt 100, der die Form eines Teilkegels aufweist. Entsprechend hat das Gehäusehauptteil 12 einen Halsabschnitt 102, der ebenfalls die Form eines Teilkegels hat und zusammen mit dem Halsabschnitt 100 bei auf das Gehäusehauptteil 12 aufgesetztem Abdeckteil 16 einen sich verjüngenden kegelförmigen Endabschnitt des Ultraschallhandstückes 10 bildet, was sowohl im Hinblick auf das Arbeiten an schlecht zugänglichen Stellen im Mund des Patienten, als auch im Hinblick auf ein gutes Ergreifen des Handstückes als auch im Hinblick auf guten Sichtkontakt zur Arbeitsstelle von Vorteil ist.

Zum lösbaren Anbringen des Abdeckteiles 16 am Gehäusehauptteil 12 weist der Halsabschnitt 100 an seinem dem Gehäusehauptteil 12 zugewandten Ende eine Positioniernase 104 auf, die mit einer komplementären Positionierausnehmung 106 im vorderen Ende des Funktionsgehäuses 66 zusammenarbeitet. Nicht näher gezeigte Rastmittel befinden sich längs der in*Figur 3 mit 108 bezeichneten Stoßkante zwischen den Halsabschnitten 100 und 102 bzw. bei dem Kappenabschnitt 88 benachbarten Ende der Halsabschnitt 100, 102.

Wie aus Figur 5 ersichtlich, hat der Anschlußabschnitt 38 an seinem außenliegenden Ende die Form eines zylindrischen Zapfens 110. In diesen ist eine Bohrung 112 eingebohrt, die geringfügig größer ist als der Durchmesser des Schaftes eines einzuspannenden Ultraschallwerkzeuges 20.

Vorzugsweise beträgt der Durchmesser eines Werkzeugschaftes 1,4 mm bzw. 2,0 mm; auch Werte im Bereich von 1,3 bis 1, 5 mm (für Werkzeugschäfte/Werkzeuge aus zähem Material, z.B. elastischem Kunststoffverbundmaterial oder metallischen Materialien) bzw. 1,8 bis 2,2 mm (sprödes Material für die Werkzeugschäfte/Werkzeuge, z.B. Keramik Silikat-Keramik, Glas, Glaskeramik) sind geeignet. Dies erlaubt einerseits die Verwendung eines axial kurzen Koppelkörpers, was im Hinblick auf guten Sichtkontakt zum Arbeitsort wünschenswert ist, sorgt andererseits noch für eine ausreichende mechanische Festigkeit des Werkzeugschaftes.

In dem mit der Bohrung 112 versehenen Zapfen 110 sind vier in Umfangsrichtung gleichförmig verteilte Schlitze 114 vorgesehen, zwischen denen federnd elastisch nach innen drückbare Spannbacken 116 verbleiben. Letztere haben bei ihren freien äußeren Enden Rampenflächen 118, die mit einer kegelstumpfförmigen Spannfläche 120 eines Spannringes 122 zusammenarbeiten. Letztere ist an seinem in Figur 5 oben liegenden Abschnitt mit einem Innengewinde versehen, das mit einem auf der Außenseite des oberen Abschnittes des Zapfens 110 eingeschnittenen Außengewinde zusammenarbeitet.

Durch Verschrauben des Spannringes 122 auf dem Zapfen 110 kann man somit die Spannzange 40 schließen bzw. öffnen.

In die vordere, in der Zeichnung unten liegende Stirnfläche des Zapfens 110 ist eine im wesentlichen becherförmige Aufnahme 124 mit einer sich zum freien Ende hin verjüngenden Umfangswand 126 eingedreht. Diese dient zur Aufnahme eines Dichtringes 128. Dieser ist aus einem rohrförmigen Kunststoff-Endlosmaterial abgestochen.

Dadurch, daß die Umfangswand 126 schräg gestellt ist, wird der in die Aufnahme 124 eingesetzte Dichtring 128 etwas um seine Längsachse tordiert, so daß man am vorderen, in der Zeichnung unten und innen liegenden Rand des Dichtringes 128 eine feine Dichtrippe 130 erhält, ohne daß diese durch Spritzen oder mechanisch hergestellt werden bräuchte. Dies wäre bei dem kleinen lichten Innendurchmesser des Dichtringes 128 (in der Praxis etwa 1,4 bzw. 2,0 mm) mit Schwierigkeiten verbunden.

Eine ähnliche Spannzange 40'ist vorgesehen, um den Antriebsabschnitt 38 lösbar mit dem Ende der Sonotrode 36 zu verbinden. Funktionell entsprechende Spannzangenteile sind mit entsprechenden zusätzlich einen Beistrich umfassenden Bezugszeichen versehen.

Die Spannzange 40' spannt anstelle eines Werkzeugschaftes einen Verbindungszapfen 129 des Koppelkörpers 18, der in einen erweiterten Endabschnitt 131 des Fluidkanales 56 eingesetzt ist. Zur Abdichtung dient ein vom Verbindungszapfen 129 getragener O-Ring 133.

Zur winkelmässigen Ausrichtung des Koppelkörpers 18 bezüglich der Achse der Sonotrode 36 trägt deren Stirnfläche einen axialen Positionieransatz 135, der mit einer passenden axialen Positionierausnehmung 137 in der in der Zeichnung rechtsgelegenen Stirnfläche des Anschlußabschnittes 34 vorgesehen ist.

Ein abgewinkelter Kanal 139 des Koppelkörpers 18 führt zum Düsenkörper 58.

Figur 6 zeigt Einzelheiten der insgesamt mit 132 bezeichneten Steckverbindung zwischen dem Gehäusehauptteil 12 und dem Gehäuseendteil 14 des Handstückes 10.

Das schon oben angesprochene Steckverbinderteil 70 umfaßt eine abgetreppte Hülse 134, welche das Knickschutzteil 72 trägt, und ein Funktionsteil 136. Letzteres hat einen in der Zeichnung rechts gelegenen becherförmigen Endabschnitt 138, dessen Umfangswand mit der Umfangswand der Hülse 134 verrastet ist. Im Boden des becherförmigen Endabschnittes 138 sind drei in Umfangsrichtung gleich verteilte Fluidanschlußstutzen 140 vorgesehen. An diese kann jeweils ein Fluidschlauch (nicht gezeigt) angebracht werden, der durch das Knickschutzteil 72 hindurchgeführt ist und über den Versorgungsschlauch 15 zu einem Versorgungsgerät führt. .

Die Fluidanschlußstutzen 140 stehen über drei geneigt zur Achse des Funktionsteiles 136 verlaufende Verbindungskanäle 142 mit einem axialen Ausgangskanal 144 des Funktionsteiles 136 in Verbindung, so daß verschiedene über die Fluidanschlußstutzen 140 zugeführte Fluids im Ausgangskanal 144 gemischt werden.

Mit dem in der Zeichnung links gelegenen Ende der Hülse 134 ist ein Ventilträger 146 unter Zwischenschaltung einer Dichtung 148 dicht verbunden. Der Ventilträger 146 ist im wesentlichen zapfenförmig und greift in eine Kammer 150 ein, die im links gelegenen Ende des Funktionsteiles 136 ausgebildet ist.

Der Ventilträger 146 weist selber eine mittige Bohrung 152 auf, in welcher ein Ventilschlauch 154 angeordnet ist.

Auf zwei gegenüberliegende Seiten des Ventilschlauches 154 drücken Schließfedern 156, die in radialen Schlitzen 158 des Ventilträgers 146 vorgesehen sind. Auf diese

Weise ist der Ventilschlauch 154 bei gelöster Steckverbindung flach gedrückt und bildet ein geschlossenes Ventil, wie in Figur 6 in der Mitte des Ventilschlauches durch ein Kreuz schematisch angedeutet.

Das in Figur 6 rechts gelegene Ende des Einsatzes 62 ist als Steckverbinderteil 162 ausgebildet und hat eine Sackbohrung 164, die zur Außenform des Funktionsteils 136 komplementär ist und gegen dieses durch einen O-Ring 166 abgedichtet ist.

Der Boden der Sackbohrung 164 trägt einen Fluid-Steckkontakt 168, der in den Ventilträger 146 einführbar ist und hierbei den Ventilschlauch 154 entgegen der Kraft der Schließfedern 156 aufdrückt.

Auf das in Figur 6 links gelegene Ende des Fluid-Steckkontaktes 168 ist das schon oben angesprochene Schlauchstück 64 (Figur 2) aufschiebbar.

In Figur 6 ist ferner eine Verbindungsnase 170 gezeigt, durch welche das Steckverbinderteil 162 und damit das Gehäusehauptteil lösbar mit dem Funktionsteil 136 und damit dem Gehäuseendteil 14 verriegelbar ist. Die Verbindungsnase 170 kann als Teil eines Bajonettverschlusses oder als Rastnase ausgebildet sein.

Die Steckverbindung 132 umfaßt neben den gezeigten und oben erläuterten Fluid-Steckkontakten auch elektrische Steckkontakte für die Stromversorgung des Scheibenpaketes 50, die aus gegen Autoklavieren resistentem Kontaktmaterial hergestellt sind.

Das Gehäusehauptteil 12, das Gehäuseendteil 14 und das Abdeckteil 16 sind aus einem Kunststoff gespritzt, der Formstabilität, Verschleißfestigkeit und niederes Gewicht mit der Eigenschaft verbindet, daß er wiederholt autoklavierbar ist, um das Handstück zu sterilisieren.

Der Koppelkörper 18 und die von ihm getragene Spannzange 40, die Sonotrode 36, die Isoliermasse 60, das Funktionsgehäuse 66 und die Gegenmasse 54 sind ebenfalls aus Materialien hergestellt, die wiederholt autoklavierbar sind, wobei der Koppelkörper 18, die Sonotrode 42 und die Gegenmasse 54 und Steckkontakte aus Metall sind, während für die anderen der genannten Teile ein Kunststoffmaterial bevorzugt wird.

Man erkennt, daß man bei dem oben beschriebenen Handstück die in Figur 4 gezeigte und dort insgesamt mit 158 bezeichnete Funktionseinheit nach dem Abnehmen des Abdeckteiles 16 vom Gehäusehauptteil 12 leicht aus dem Gehäusehauptteil 12 entfernen kann, indem man die Gewinderippe 82 aus der Gewindenut 84 herausdreht. Die Funktionseinheit 158, das Gehäusehaupteil 12 und das Abdeckteil 16 können dann auch getrennt zuverlässig autoklaviert werden.

Das Gehäuseendstück 14, welches mit Arbeitsflüssigkeit und Körperflüssigkeiten des Patienten nur wenig in Berührung kommt, kann in der Regel kalt desinfiziert werden. Falls gewünscht, kann aber auch die Hülse 134 aus dem Gehäuseendteil 14 ausgebaut werden, so daß auch dieses Teil und das Gehäuseendteil 14 getrennt autoklavierbar sind.

Man erkennt ferner, daß bei dem oben beschriebenen Ultraschallhandstück keine Gefahr besteht, daß der Koppelkörper 18 durch unerwünschten Kontakt mit Mundgewebe unbeabsichtigt bedämpft wird, was einerseits zu Arbeitsstörungen führen würde, andererseits möglicherweise Gewebeschädigungen hervorruft, die durch Erzeugung von Reibungswärme an trockenen Gewebeoberflächen bedingt sind.

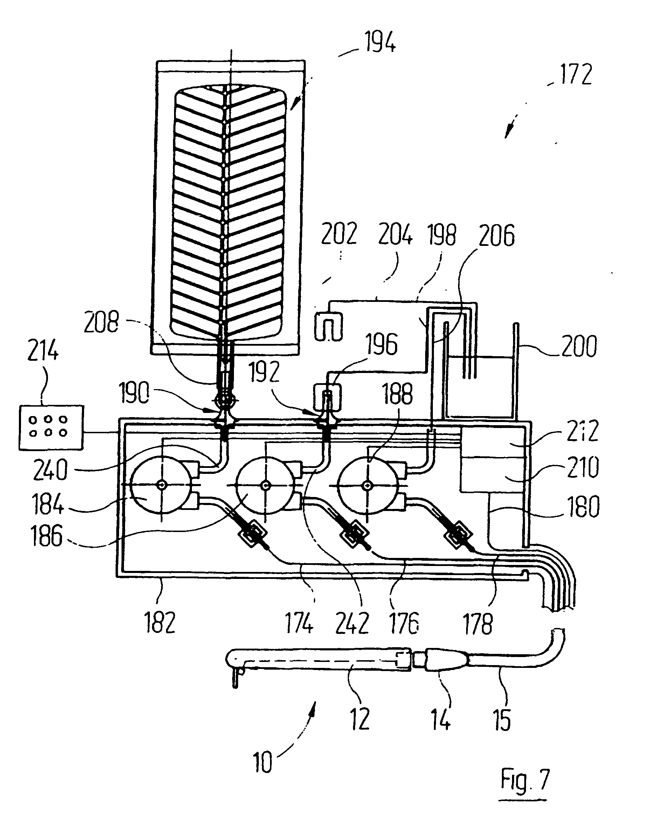

In Figur 7 ist mit 172 insgesamt eine Versorgungseinheit bezeichnet, welche die Versorgung des Ultraschall-Handstükkes 10 mit zwei unterschiedlichen Konzentraten und Wasser gewährleistet und zusätzlich den Speisestrom für das Scheibenpaket 50 bereitstellt. Drei flexible ausgangsseitige dünne Schläuche für die drei verschiedenen Flüssigkeiten sind mit 174, 176, 178 bezeichnet, ein Kabel für die Stromversorgung des Scheibenpaketes 50 mit 180.

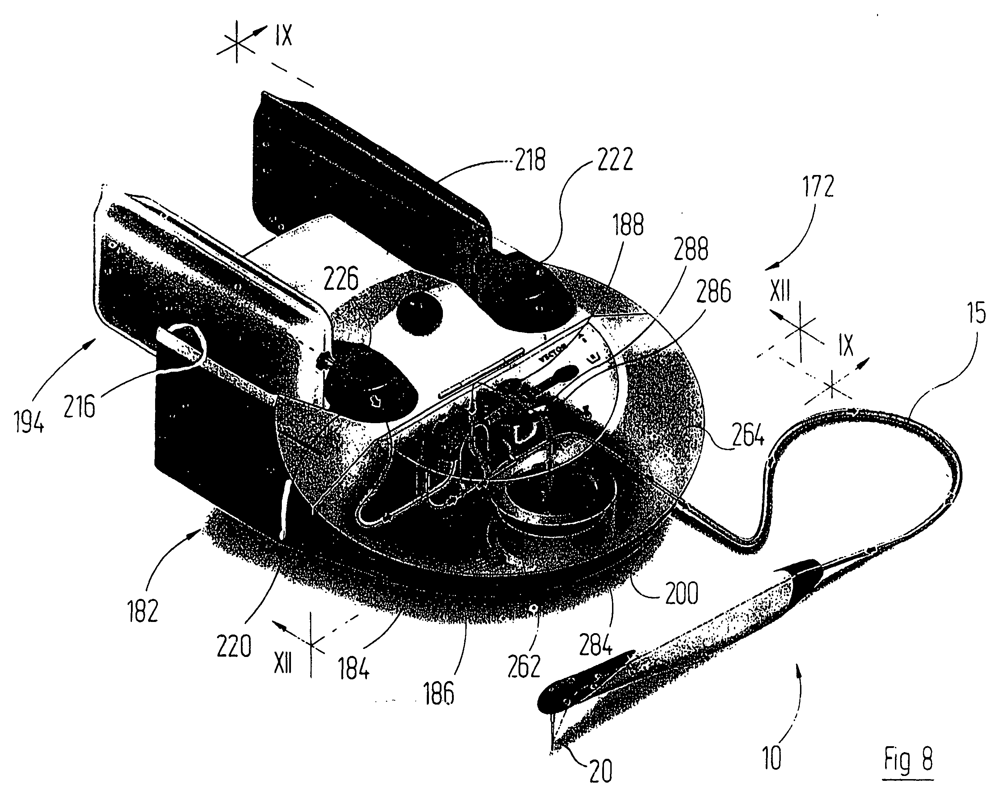

In einem Gehäuse 182 der Versorgungseinheit 172 sind drei Schlauchpumpen 184, 186, 188 vorgesehen. Von diesen saugen die Schlauchpumpen 184 und 186 von Kanüleneinheiten 190, 192 her an, auf die jeweils ein Vorratsbehälter 194 für Konzentrat aufgedornt werden kann. In*Figur 8 ist nur die Kanüleneinheit 190 mit einem Vorratsbehälter 194 bestückt, auf die Kanüleneinheit 192 ist zu Erläuterungszwecken ein Anschlußkopf 196 gesteckt, der über eine Leitung 198 Wasser aus einem Wasser-Vorratsbehälter 200 ansaugen kann. Ein zweiter Anschlußkopf 202, der bei abgenommenem Vorratsbehälter 194 auf die Kanüleneinheit 190 aufgedornt werden kann, ist in Bereitschaftstellung wiedergegeben. Er ist über einen Schlauch 204 mit dem Inneren des Wasservorratsbehälter verbunden. Ein dritter Schlauch 206 geht vom Inneren des Wasservorratsbehälters direkt zu der Saugseite der dritten Schlauchpumpe 188.

Der Vorratsbehälter 194 ist ein aus Kunststoffolie gespeister dichter Behälter, in welchem sich ein mit Wasser zu verdünnendes Konzentrat befindet, z.B. abrasive Partikel wie SiC-Partikel oder Hydroxylapatit-Partikel, die in Wasser unter Verwendung eines Verdickungsmittels bleibend suspendiert sind. Im Inneren des Vorratsbehälters 194 ist eine Nutplatte 206 angeordnet, die mit einem fischgrätartigen Nutmuster versehen ist, um ein Entleeren des Vorratsbehälters bis auf den letzten Rest zu ermöglichen. Der Vorratsbehälter 194 hat einen Entnahmekopf 208, der mit der Kanüleneinheit 190 zusammenarbeitet und später noch genauer beschrieben wird.

Zur Erzeugung des Speisestromes für den Ultraschallschwinger enthält die Versorgungseinheit 172 eine Betriebsschaltung 210. Zur Steuerung der verschiedenen Schlauchpumpen 184, 186, 188 ist in der Versorgungseinheit 172 eine Steuerschaltung 212 vorgesehen.

Die Schläuche 174, 176 und 178 sind mit den drei Anschlußstutzen 140 des Ultraschall-Handstückes verbunden, die in Figur 6 dargestellt sind.

Ist auf die zweite Kanüleneinheit 192 ein weiterer Vorratsbehälter 194 aufgedornt, so kann die Versorgungseinheit 172 das Ultraschall-Handstück somit mit Konzentrat aus dem ersten Vorratsbehälter, mit Konzentrat aus dem zweiten Vorratsbehälter und mit Wasser versorgen, und diese drei Flüssigkeiten werden durch die Verbindungskanäle 142 gleichermaßen dem Ausgangskanal 144 des Steckverbinderteiles 70 zugeführt, wie aus*Figur 6 ersichtlich, so daß im Abgabekanal 144 eine Arbeitsflüssigkeit bereitgestellt wird, die aus Wasser, erstem Konzentrat und zweitem Konzentrat besteht.

Vorzugsweise arbeitet die Steuerschaltung aber so, daß nur jeweils eine Konzentrat-Sclauchpumpe (184 oder 186) arbeitet, so daß man z.B. eine Arbeitsflüssigkeit mit SiC-Partikeln oder eine andere Arbeitsflüssigkeit mit Hydroxylapatit-Partikeln erhält.

Es versteht sich, daß auch eine Arbeitsflüssigkeit hergestellt werden kann, die nur Wasser und eines der Konzentrate enthält, wozu über eine Eingabeeinheit 214 entsprechende Befehle auf die Steuerschaltung 212 gegeben werden. Die Eingabeeinheit 214 kann ein Tastenfeld und/oder ein Fußschalter neben Hauptkontakten zum Steuern des Ultraschall-Handstückes noch Nebenkontakte aufweisen, um die Zugabe von Konzentrat aus einem oder beiden Vorratsbehältern 194 anzufordern.

Ein Ultraschallhandstück, wie es oben beschrieben wurde, braucht nur geringe Mengen an Arbeitsflüssigkeit, da die Arbeitsflüssigkeit im Prinzip nur als Film zwischen der Werkzeugoberfläche und der Gewebeoberfläche vorzuliegen braucht. Abgabemengen von 4 bis 5 ml pro Minute sind in der Praxis völlig ausreichend. Um derartig kleine Flüssigkeitsmengen einstellen zu können, trotzdem aber einen scharfen Strahl der Arbeitsflüssigkeit zwischen dem Ende des Düsenkörpers 58 und der Oberfläche des Werkzeuges 20 zu gewährleisten, erfolgt die Flüssigkeitszufuhr intermittierend, wobei die mittlere Menge der Arbeitsflüssigkeit über das Tastverhältnis zwischen EIN-Zeit und AUS-Zeit der Flüssigkeitsabgabe eingestellt wird. Typische Tastverhältnisse liegen im Bereich zwischen 1:10 und 6:10. Für die Praxis haben sich Tastverhältnisse von etwa 1:5 als besonders günstig erwiesen.

Die Steuerschaltung 212 steuert die Schlauchpumpen 184, 186, 188 mit entsprechenden EIN- und AUS-Zeiten an.

Damit der Versorgungsschlauch 15 insgesamt nur kleinen Durchmesser aufweist und gut flexibel ist, werden die Durchmesser der einzelnen Schläuche 174, 176, 178 klein gewählt, was an sich für den gewünschten Flüssigkeitsdurchsatz auch ohne weiteres möglich ist. Zuweilen müssen aber aus den Vorratsbehältern 194 hochviskose Konzentrate verarbeitet werden (z.B. Verdickungsmittel enthaltende wässrige Lösungen von abrasiven Partikeln), so daß zwischen der zu transportierenden Flüssigkeit und dem sie führenden der Schläuche 174, 176, 178 hohe Reibung vorliegt.

Um in solchen Fällen zu gewährleisten, daß Konzentrat und Wasser gleichzeitig in die Verbindungskanäle 142 eingespeist werden, was notwendig ist, damit die Arbeitsflüssigkeit von Anfang an die gleiche Zusammensetzung hat, erfolgt die Ansteuerung derjenigen Schlauchpumpen, die hochviskoses Konzentrat fördern müssen, derart zur Ansteuerung der Wasser fördernden Schlauchpumpe 188 zeitlich nach vorne versetzt, daß Wasser und Konzentrat(e) gleichzeitig dem Abgabekanal 144 zugeführt werden.

Durch die zeitversetzt Aktivierung der Schlauchpumpen wie vorstehend beschrieben, können auch weitere Verzögerungseffekte kompensiert werden, die daraus resultieren, daß sich die Schläuche 174, 176, 178, die aus verhältnismäßig weichem flexiblem Material gefertigt sind, bei Druckbeaufschlagung etwas ausdehnen (dies führt zu einer weiteren Verzögerung der Flüssigkeitsabgabe am stromabgelegenen Schlauchende).

Wie oben dargelegt, wird gewünscht, daß die Arbeitsflüssigkeit in definierten scharfen Paketen auf das Werkzeug 20 aufgespritzt wird. Um am Ende eines Arbeitszyklus ein Nachtröpfeln von Arbeitsflüssigkeit aus dem Düsenkörper 58 zu vermeiden, ist es notwendig, daß am Ende eines jeden Arbeitszyklus der Druck in den Schläuchen 174, 176, 178 abgebaut wird. Hierzu werden die Schlauchpumpen 184, 186, 188 durch die Steuerschaltung 212 kurz in Rückwärtsrichtung angetrieben.

Wird das Ultraschall-Handstück bei Unterbrechung oder Beendigung der Arbeit abgestellt, so befindet sich in dem Fluidkanal 56 noch Arbeitsflüssigkeit. Um zu vermeiden, daß sich diese Arbeitsflüssigkeit im nur kleinen Durchmesser aufweisenden Fluidkanal 56 entmischt und möglicherweise letzteren verstopft, treibt die Steuerschaltung 212 bei jedem Ausschalten des Ultrasschall-Handstückes die Wasser fördernde Schlauchpumpe 188 noch eine vorgegebene Zeitspanne an, so lange, bis aus dem Düsenkörper 58 reines Wasser austritt. Es handelt sich hierbei um eine durch Versuche einfach zu ermittelnde Zeitspanne, die als Festwert in der Steuerschaltung 212 abgelegt wird.

Wird nach diesem bei jedem Abschalten des Ultraschall-Handstückes erfolgenden Spülen des letzteren das Ultraschall-Handstück wieder in Betrieb genommen, so befindet sich zunächst noch reines Wasser im Fluidkanal 56. Um dieses raschestmöglich zu verdrängen, wird mit dem Einschalten des Ultraschall-Handstückes für einen oder einige wenige Betriebszyklen das Tastverhältnis zwischen EIN-Zeit und AUS-Zeit der Erzeugung von Arbeitsflüssigkeit vergrößert, so daß neu bereitete Arbeitsflüssigkeit rasch den Düsenkörper 58 erreicht und der Zahnarzt mit seiner Arbeit beginnen kann.

Figur 8 zeigt eine perspektivische Ansicht eines praktischen Ausführungsbeispieles für eine Versorgungseinheit 172. Deren Gehäuse 182 hat im hinteren Abschnitt zwei leicht schräg nach oben ansteigende, nach hinten offene taschenförmige Ausnehmungen 216, 218, in denen jeweils ein Vorratsbehälter 194 angeordnet ist. Diese können z.B. dickflüssige Konzentrate zur Herstellung von Arbeitsflüssigkeit mit SiC-Partikeln (zum Präparieren von Zahnhartgeweben oder Zahnersatzwerkstoffen) bzw. mit Hydroxylapatit-Partikeln (Abtragen von Ablagerungen auf Oberflächen von Zähnen oder Restaurationsteilen und zum Polieren) enthalten.

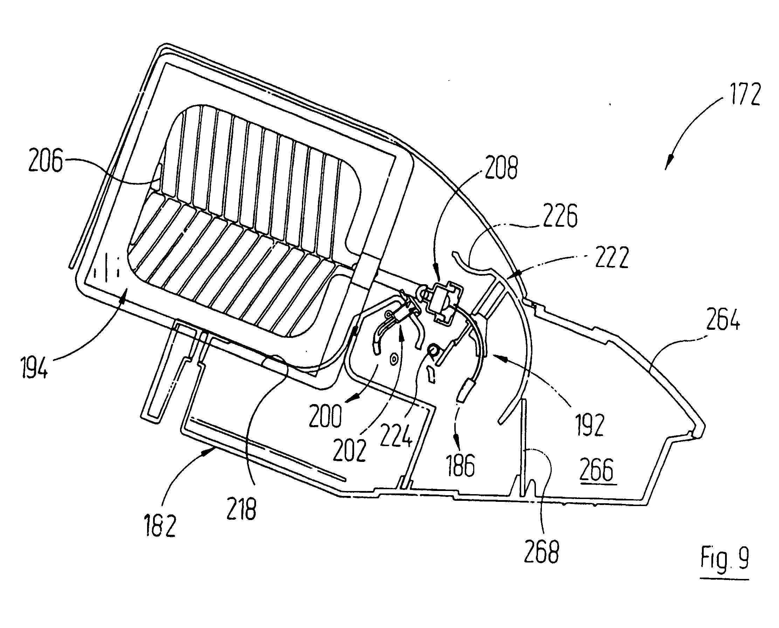

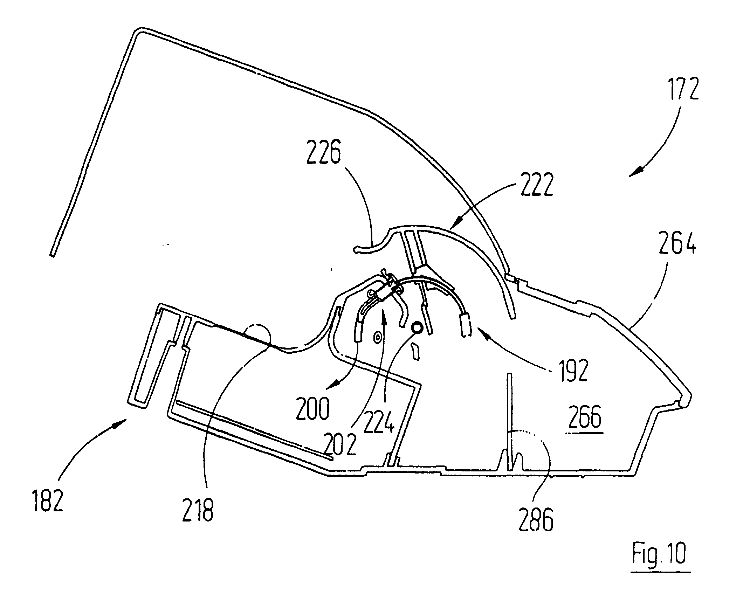

Die Kanüleneinheiten 190, 192 sind von Betätigungskörpern 220, 222 getragen, die (vergleiche Figuren 9 bis 11) auf Achsen 224 verschwenkbar im Gehäuse 182 gelagert sind und so zwischen einer in Figur 8 und 9 sowie 11 gezeigten Arbeitsstellung, in welcher sie eine Verbindung zum Inneren der Vorratsbehälter 194 herstellen, und einer in Figur 10 dargestellten Spülstellung verlagerbar sind. Zur leichteren Drehmomentausübung sind die Betätigungskörper 220, 222 jeweils mit einer Vertiefung 226 versehen.

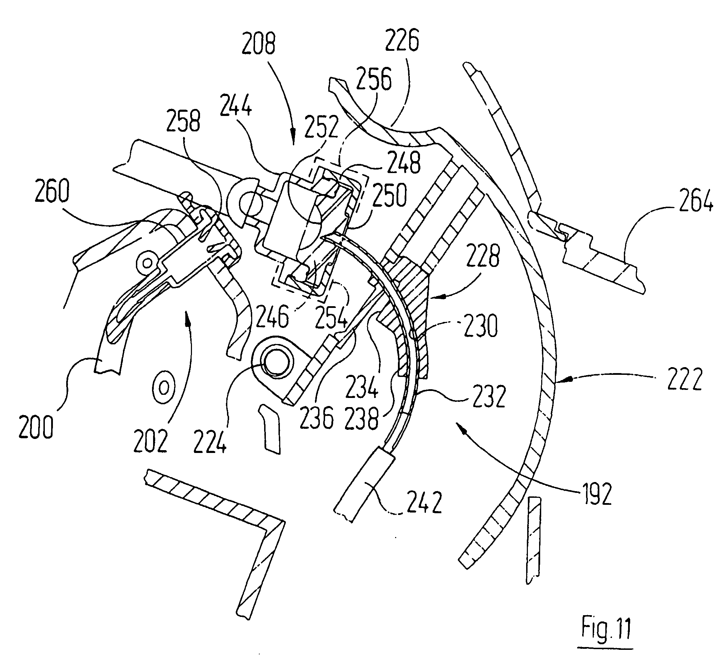

Wie insbesondere aus Figur 11 ersichtlich, haben die Kanüleneinheiten jeweils einen Kanülenträger 228, der eine gebogene Aufnahmebohrung 230 für eine zur Schwenkachse des Betätigungskörpers 222 (bzw. 220) konzentrische Kanüle 232 aufweist. Der Kanülenträger 228 weist einen Schlitz 234 auf, so daß man zwei federnd gegeneinander bewegbare Trägerabschnitte 236, 238 erhält, in denen jeweils ein Abschnitt der Aufnahmebohrung 230 verläuft. Im spannungsfreien Zustand verlaufen die Achsen der beiden Abschnitte der Aufnahmebohrung 230 nicht exakt konzentrisch zur Achse 224. Durch Zusammendrücken kann der Kanülenträger 228 aber in eine Geometrie gebracht werden, in denen die beiden Abschnite der Aufnahmebohrung 230 exakt in Umfangsrichtung fluchten. In dieser Geometrie kann dann die Kanüle 232 in die Aufnahmebohrung 230 eingeführt werden, und gibt man den Kanülenträger 228 anschließend frei, ist die Kanüle 232 elastisch im Kanülenträger arretiert.

Auf das hintere Ende der Kanüle 232 ist ein Schlauch 240 bzw. 242 aufgeschoben (vergleiche Figur 7), der zur Saugseite der zugeordneten Schlauchpumpe 184 bzw. 186 führt.

Wie aus Figur 11 ersichtlich, hat der Entnahmekopf 208 des Vorratsbehälters 194 ein becherförmiges Grundteil 244, auf welches unter Zwischenschaltung eines aus elastomerem Material hergestellten Dichtteiles 246 ein Deckelteil 248 aufgerastet ist. Das Deckelteil 248 hat einen verminderte Dicke aufweisenden mittigen Siegelabschnitt 250. Die Rückseite des Dichtteiles 246 ist konkav geformt, wie bei 252 gezeigt.

Durch mit dem Deckelteil 248 bzw. dem Grundteil 244 zusammenarbeitende Führungsleisten 254, 256 ist der Anschlußkopf 196 des Vorratsbehälters 194 im Inneren des Gehäuses 182 positioniert.

Figur 11 zeigt die Verhältnisse beim Einsetzen eines neuen Vorratsbehälters 194. Dieser ist in eine der Ausnehmungen 216, 218 des Gehäuses 182 eingesetzt worden, wobei sein Entnahmekopf 208 zwischen die Führungsteile 254, 256 zu liegen kam. Der Betätigungskörper 222 ist entgegen dem Uhrzeigersinn aus einer in der Zeichnung rechts gelegenen Ruhestellung herausgeschwenkt worden. Das angeschärfte Ende der Kanüle 232 hat den Siegelabschnitt 250 durchstoßen und ist gerade dabei sich durch das Dichtteil 246 hindurchzuarbeiten. Bei weiterer Drehung des Betätigungskörpers 222 um einen weiteren Winkel durchstößt dann das Ende der Kanüle 232 das Dichtteil 246 und steht dann strömungsmitteldicht mit dem Inneren des Vorratsbehälters 194 in Verbindung.

Die Saugpumpe kann dann aus dem Inneren des Vorratsbehälters 194 hohe Viskosität aufweisendes Konzentrat ansaugen, wobei der Vorratsbehälter in dem Maße zusammenfällt, wie Konzentrat abgesaugt wird. Der letzte Rest des Konzentrates kann unbehindert aus dem Vorratsbehälter 194 abgesaugt werden, da sich im letzteren die Nutplatte 206 befindet, die ein vollständiges Zusammenfallen des Folienbeutels verhindert.

Wünscht man die gesamten Leitungen zwischen einer Entnahmekanüle und dem Düsenkörper 58 zu reinigen, so wird der zugeordnete Vorratsbehälter 194 entfernt. Damit kann dann die Kanüle 232 durch Drehen des Betätigungskörpers 222 über die in Figur 11 gezeigte Stellung hinaus gegen eine Dichtmembran 258 bewegt werden, welche ein becherförmiges Wasserabgabeteil 260 am offenen Ende verschließt, das von der Funktion her dem Anschlußkopf 202 von Figur 7 entspricht, mit der Ausnahme, daß gemäß Figur 7 die Kanüleneinheiten 190, 192 feststehend sind und ein Vorratsbehälter 194 bzw. ein Anschlußkopf 196 bzw. 202 an ihnen angebracht wird, während die Kanüleneinheiten 190, 192 gemäß Figur 11 beweglich sind und ein Entnahmekopf 208 des Vorratsbehälters 194 bzw. das Wasserabgabeteil 260 stationär sind.

Das Wasserabgabeteil 260 ist an das Ende des Schlauches 198 bzw. 204 angeschlossen und steht über letzteren mit dem Wasser-Vorratsbehälter 200 in Verbindung.

In der durch Durchführen der Kanüle 232 durch die Dichtmembran 258 erhaltenen Spülstellung, die in Figur 11 wiedergegeben ist, wird durch die Schlauchpumpe 184 bzw. 186 reines Wasser aus dem Wasser-Vorratsbehälter 200 angesaugt und über das gesamte Leitungssystem zum Düsenkörper 58 gefördert, so daß das gesamte interne Leitungssystem der Behandlungseinrichtung gespült wird. Zur internen Desinfektion der Behandlungseinrichtung kann eine Desinfektionsmittellösung (z.B. eine alkoholische Lösung) in den Wasser-Vorratsbehälter 200 gegeben werden.

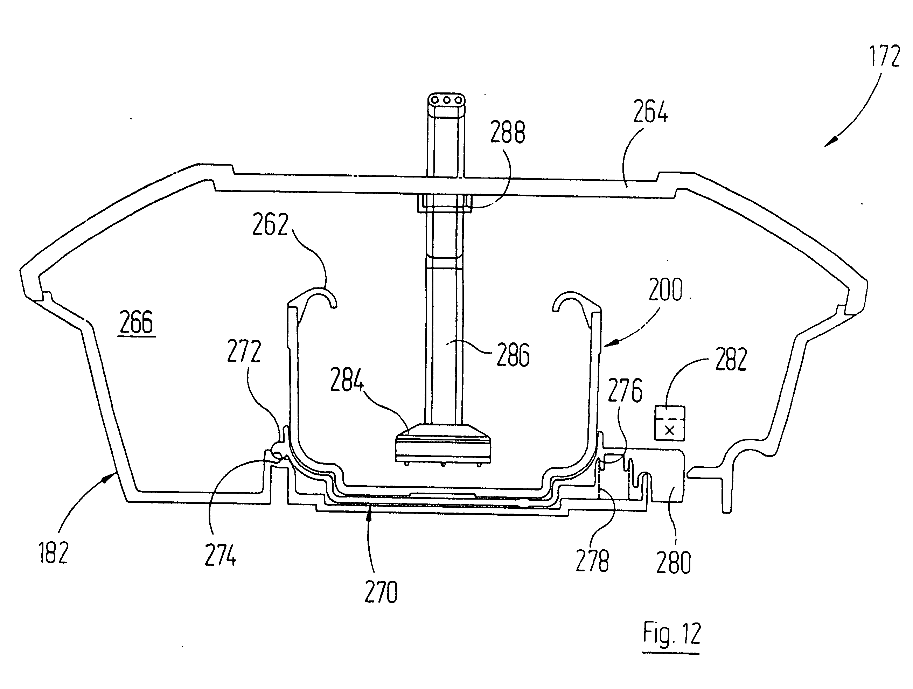

Wie aus Figur 12 ersichtlich, hat der Wasser-Vorratsbehälter einen lösbar oben angesetzten getrennt desinfizierbaren Schwappring 262, der verhindert, daß an einem Hahn eingelassenes Wasser überschwappt, wenn der Wasser-Vorratsbehälter 200 vom Wasserhahn getragen und in das Gehäuse 182 nach Öffnen eines Deckels 264 eingesetzt wird. Letztere ist im wesentlichen halbkreisförmig und überdeckt eine große Zugangsöffnung zu einer vorderen Kammer 266 des Gehäuses 182, in welcher der Wasser-Vorratsbehälter 200 und die drei Schlauchpumpen 184, 186, 188 (letztere getragen durch eine Zwischenwand 268 des Gehäuses, vgl. Figur 9: in den anderen Figuren weggelassen) angeordnet sind.

Der Wasser-Vorratsbehälter 200 steht auf einer Wiegeplatte 270, die der Form des unteren Abschnittes des Wasser-Vorratsbehälters 200 angepaßte Geometrie hat.

Bei ihrem in Figur 12 links gelegenen Ende hat die Wiegeplatte 270 eine angeformte zylindrische Lagerrippe 272, die mit einer vom Boden des Gehäuses hochgezogenen komplementären Lagerpfanne 274 zusammenarbeitet.

Beim in Figur 12 rechts gelegenen Ende der Wiegeplatte 270 ist ein Federsitz 276 ausgebildet, welcher das obere Ende einer am Gehäuseboden abgestützten Druckfeder 278 aufnimmt.

An das rechte Ende der Wiegeplatte 270 ist ferner eine Fahne 280 angeformt, die mit einer Lichtschranke 282 zusammenarbeitet.

Ist im Inneren des Wasser-Vorratsbehälters 200 ausreichend Wasser vorhanden, so wird durch dessen Gewicht die Wiegeplatte 270 in die in der Zeichnung dargestellte untere Stellung verschwenkt, in der sie am Boden des Gehäuses 182 anliegt. Ist der Vorrat im Wasser-Vorratsbehälter 200 auf einen vorgegebenen Wert abgesunken, so wird die Kraft der Druckfeder 278 größer als das Gewicht der durch sie abgestützten Teile, und die Wiegeplatte 270 beginnt sich bei weiterer Wasserentnahme aus dem Wasser-Vorratsbehälter 200 nach oben zu bewegen. Ist im Wasser-Vorratsbehälter 200 nur noch eine Wasser-Restmenge enthalten, die zwar noch ein weiteres Arbeiten von größenordnungsmäßig einigen Minuten ermöglicht, jedoch für langwierige Arbeiten nicht mehr ausreicht, so hat sich die Fahne 280 so weit nach oben bewegt, daß die Lichtschranke 282 anspricht und ein Alarm ausgelöst wird.

Um den Wasser-Vorratsbehälter 200 bequem entnehmen zu können, ohne einen zugleich einen Gewichtskörper darstellenden Ansaugkopf 284 von Hand aus dem Wasser-Vorratsbehälter 200 herausziehen zu müssen, ist ein Mehrkanal-Schlauch 286, in welchem die letzten Abschnitte der Schläuche 198, 204, 206 gemeinsam geführt sind, über eine Befestigungsstelle 288 an der Unterseite des Deckels 264 befestigt. Mit dem Öffnen des Deckels 264 wird damit der Ansaugkopf 284 über den oberen Rand des Wasser-Vorratsbehälters 200 angehoben.

Aus der obigen Beschreibung ist folgendes ersichtlich:

Bis zu der durch die Verbindungskanäle 142 und den Ausgangskanal 144 gebildeten Mischeinrichtung, die im hinteren Teil es Ultraschall-Handstückes 10 liegt, werden nur beständige Flüssigkeiten gefördert. Es sind dies zum einen Wasser, zum anderen in sich homogene und stabilisierte Konzentrate, z.B. wässrige Suspensionen von abrasiven Partikeln, die wegen Zugabe von Verdickungsmitteln und weiteren Stabilisierungsmitteln auch langfristig keine Sedimentation zeigen, oder Konzentrate von Wirkstoffen, auch solchen, die möglicherweise nicht bleibend mit Wasser mischbar sind usw.

Hinter der Mischeinrichtung strömt die Arbeitsflüssigkeit dann durch das kurze Schlauchstück 64 und dann durch den Fluidkanal 56, der von der Gegenmasse 54 bis hin zum Düsenkörper 58 im Betrieb des Ultraschall-Handstückes ständig mit Ultraschall beaufschlagt ist, so daß sich auch hier keine Entmischungseffekte ergeben. Wird das Ultraschall-Handstück 10 nicht betrieben, so wird es durch die Steuerschaltung 212 mit Wasser durchgespült, so daß auch bei anschließendem langem Stillstand keine Ablagerungen im Inneren des Fluidkanals 56 aufgebaut werden.

Damit eignet sich die oben beschriebene Behandlungseinrichtung zur einfachen, zuverlässigen und sparsamen Erzeugung von Arbeitsflüssigkeit ohne manuelles Zutun. Die Reinigung der verschiedenen Verbindungsleitungen läßt sich leicht automatisch erledigen, so daß die gesamte Behandlungseinrichtung weitestgehend wartungsfrei ist.

Wie obenstehend schon beschrieben wurde, ist die Achse des Düsenkörpers 58 so angeordnet und geneigt, daß ein von diesem abgegebener Flüssigkeitsstrahl in einen mittleren Bereich oder einen Endbereich eines in die Spannzange 40 eingespannten Werkzeuges trifft. Bei den kompakten Abmessungen des arbeitsseitigen Endes des Ultraschall-Handstückes, wie sie im Hinblick auf das Arbeiten an schlecht zugänglichen Stellen des Mundraumes und im Hinblick auf guten Sichtkontakt zur Arbeitsstelle wünschenswert sind, besteht damit zwangsläufig ein nur behinderter Zugang zum Düsenkörper 58, der trotz der oben angesprochenen Spülmöglichkeiten gelegentlich ersetzt werden muß.

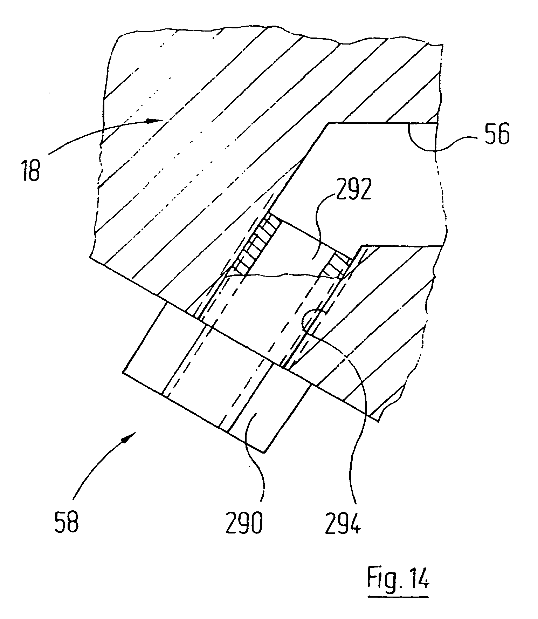

Um das Austauschen des Düsenkörpers 58 zu erleichtern, ist dieser (vergleiche Figur 14) am vorderen Ende mit einem Sechskantabschnitt 290 versehen. Ein hinterer Schaftabschnitt 292 des Düsenkörpers 58 ist glatt. Der gesamte Düsenkörper ist ein Kunststoff-Spritzteil kann somit selbstschneidend in ein Gewinde 294 eingedreht werden, welches am Ende des im Koppelkörper 18 verlaufenden geneigten Endabschnittes des Fluidkanales 56 vorgesehen ist.

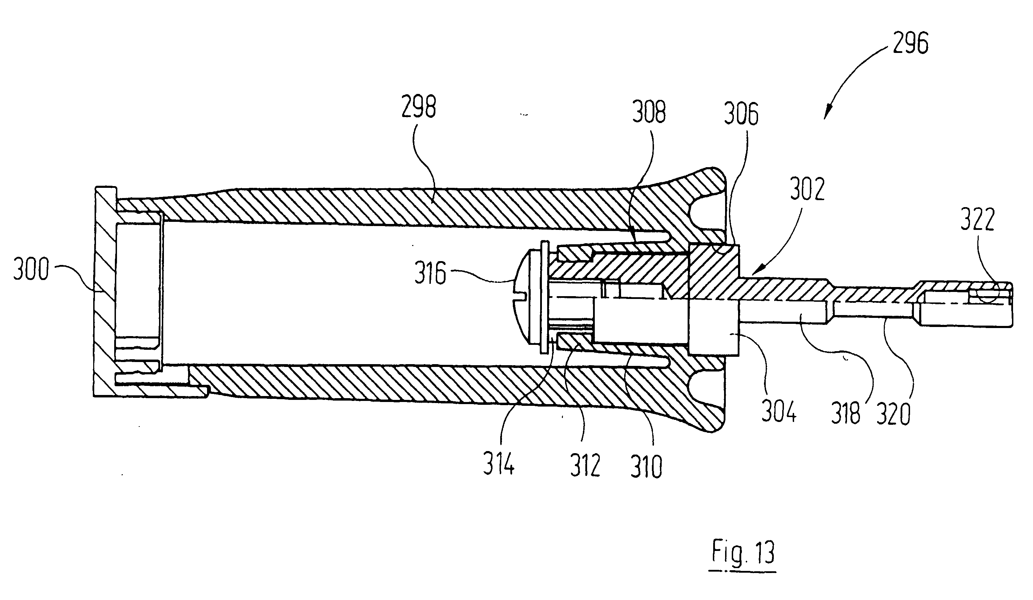

Zum Einschrauben des Düsenkörpers 58 in das Gewinde 294 dient ein Schraubwerkzeug 296, wie es in*Figur 13 dargestellt ist.

Es hat einen hohlen Griff 298, der am unteren Ende durch einen Deckel 300 verschlossen ist. Das in Figur 13 rechts gelegene Ende des Griffes 298 lagert einen Einsatz 302. Hierzu ist der Einsatz 302 mit einem Bund 304 versehen, der in einer Lagerausnehmung 306 der rechten Stirnwand des Griffes 298 läuft, und von der in Figur 13 rechten Endwand des Griffes 298 steht nach links eine Hülse 308 ins Griffinnere vor. Letztere ist geschlitzt, so daß man eine Vielzahl axialer Federarme 310 erhält. Diese haben an ihren in Figur 13 links gelegenen Enden Ratschenzähne 312, mit denen sie in Ratschenausnehmungen im in Figur 13 links gelegenen Ende des Einsatzes 302 eingreifen.

Zum axialen Verriegeln des Einsatzes 302 am Griff 298 dient eine Kopfschraube 316. Auf diese Weise kann der Einsatz 302 in der einen Richtung unter Drehmomentbegrenzung durch den Griff 298 gedreht werden, während in der anderen Richtung eine starre Mitnahme erfolgt.

In einem über den Griff 298 überstehenden Schaft 318 hat der Einsatz 302 einen verminderten Durchmesser aufweisenden Abschnitt 320. Dieser ist im Durchmesser so gewählt, daß das fluchtend auf die Achse des Düsenkörpers 58 ausgerichtete Schraubwerkzeug 296 die Spannzange 40 umgeht. Im vorderen Abschnitt des Schaftes 318 ist eine Sechskantvertiefung 322 vorgesehen, die mit dem Sechskantabschnitt 290 des Düsenkörpers 58 zusammenarbeitet.

Im Inneren des Griffes 298 kann ein Vorrat von neuen Düsenkörpern gehalten werden.

## Patentansprüche

1. Dentale Einrichtung zur Behandlung von Geweben mit vorzugsweise hochfrequenten mechanischen Schwingungen, mit einem Handstück (10), welches einen schwingungerzeuger (50) und ein durch diesen angetriebenes Werkzeug (20) sowie Abgabemittel (58) zum Abgeben einer Arbeitsflüssigkeit in die Nähe des Werkzeuges (20) aufweist, mit mindestens einen Vorratsbehälter (194) für ein Konzentrat, aus welchem durch Verdünnung mit Wasser eine Arbeitsflüssigkeit hergestellt werden kann, mit einer Wasserquelle (200) und mit einer mischeinrichtung (142, 144) zum Mischen von Konzentrat und Wasser, welche eingangsseitig mit dem Konzentrat-Vorratsbehälter (194) und der Wasserquelle (200) und ausgangsseitig mit dem Abgabemittel (58) verbunden ist, **dadurch gekennzeichnet, daß** die Mischeinrichtung (142, 144) im Handstück (10) angeordet ist.

2. Einrichtung nach Anspruch 1, **dadurch gekennzeichnet, daß** die Mischeinrichtung eine Mehrzahl von Komponentenkanälen (142) aufweist, die in einen gemeinsamen Abgabekanal (144) für Arbeitsflüssigkeit einmünden.

3. Einrichtung nach Anspruch 2, **dadurch gekennzeichnet, daß** die Komponentenkanäle (142) sich längs Mantellinien eines Kegels erstrecken und der Abgabekanal (144) auf der Achse des Kegels verläuft, wobei die Komponentenkanäle (142) vorzugsweise in Umfangsrichtung gleich verteilt sind.

4. Einrichtung nach einem der Ansprüche 1 bis 3, **dadurch gekennzeichnet, daß** die Mischeinrichtung (142, 144) in einem hinteren Gehäuseteil (14) des Handstückes (10) angeordnet ist, welches als Steckverbinderteil (70) ausgebildet ist.

5. Einrichtung nach Anspruch 4, **dadurch gekennzeichnet, daß** das im hinteren Gehäuseteil (14) vorgesehene Steckverbindungsteil (70) ein dem Ausgang der Mischeinrichtung (142, 144) nachgeschaltetes Ventil (154, 156) aufweist, welches normalerweise geschlossen ist und durch Aufstekken eines am Gehäuse (12) vorgesehenen Steckverbinderteiles (162) zwangsweise geöffnet wird.

6. Einrichtung nach einem der Ansprüche 1 bis 5, **dadurch gekennzeichnet, daß** die Abgabemittel (58) mechanisch mit dem Schwingungserzeuger (50) gekoppelt sind.

7. Einrichtung nach Anspruch 6, **dadurch gekennzeichnet, daß** das Abgabemittel (58) von einem Koppelkörper (18) getragen ist, der einen durch den Schwingungserzeuger (50) getriebenen Abschnitt und einen mit dem Werkzeug (20) verbundenen treibenden Abschnitt aufweist.

8. Einrichtung nach Anspruch 6 oder 7, **dadurch gekennzeichnet, daß** ein die Arbeitsflüssigkeit zu dem Abgabemittel (58) leitender Speisekanal (56) schwingungsmäßig mit dem Schwingungserzeuger (50) gekoppelt ist.

9. Einrichtung nach Anspruch 8, **dadurch gekennzeichnet, daß** der Speisekanal (56) vorzugsweise mittig durch eine mit dem Schwingungserzeuger (50) gekoppelte und das Werkzeug (20) antreibende Sonotrode (36) des Handstückes hindurchgeführt ist.

10. Einrichtung nach Anspruch 8 oder 9, **dadurch gekennzeichnet, daß** der Speisekanal (56) vorzugsweise mittig durch eine mit dem Schwingungserzeuger (50) gekoppelte Gegenmasse (54) hindurchgeführt ist.

11. Einrichtung nach einem der Ansprüche 1 bis 10, **dadurch gekennzeichnet, daß** das Abgabemittel einen Düsenkörper (58) umfaßt, dessen Achse das Werkzeug (20) in einem mittleren oder dem freien Ende benachbarten Abschnitt schneidet.

12. Einrichtung nach Anspruch 11 in Verbindung mit Anspruch 7, **dadurch gekennzeichnet, daß** der Düsenkörper (58) aus einem Kunststoffmaterial gefertigt ist und am freien Ende mit Formschlußmitteln (290) versehen ist, während ein Schaftabschnitt (292) selbstschneidend in eine Gewindebohrung (294) des Koppelkörper (18) eingedreht ist, welche mit der Arbeitsflüssigkeit beaufschlagt ist.

13. Einrichtung nach einem der Ansprüche 1 bis 12, **dadurch gekennzeichnet, daß** mindestens einer der Vorratsbehälter (194) und vorzugsweise auch die Wasserquelle (200) über eine Dosierpumpe (184, 186, 188) mit der Mischeinrichtung (142, 144) verbunden ist.

14. Einrichtung nach Anspruch 13, **dadurch gekennzeichnet, daß** zumindest ein Teil der Dosierpumpen (184, 186, 188) Schlauchpumpen sind.

15. Einrichtung nach Anspruch 13 oder 14, **gekennzeichnet durch** eine Steuerung (212) für die Dosierpumpen (184, 186, 188), welche die Dosierpumpen intermittierend aktiviert.

16. Einrichtung nach Anspruch 15, **dadurch gekennzeichnet, daß** die Steuerung (212) die Dosierpumpen (184, 186, 188) jeweils zum Ende eines Betriebsintervalles für eine vorgegebene Zeitspanne in Rückwärtsrichtung antreibt.

17. Einrichtung nach Anspruch 15 oder 16, **dadurch gekennzeichnet, daß** die Pumpensteuerung (212) das Verhältnis zwischen EIN-Zeit und AUS-Zeit der Dosierpumpen (184, 186, 188) im Bereich zwischen 1 : 10 und 6 : 10, vorzugsweise von etwa 1 : 6 bis 1 : 3 einstellt.

18. Einrichtung nach einem der Ansprüche 15 bis 17, **dadurch gekennzeichnet, daß** die Pumpensteuerung (212) die Dosierpumpen (184, 186, 188) zu einem gemäß der Viskosität des jeweils zu fördernden Mediums gewählten Zeitpunkt so nacheinander einschaltet, daß die Abgabe der verschiedenen Medien in der Mischeinrichtung (142, 144) gleichzeitig einsetzt.

19. Einrichtung nach einem der Ansprüche 15 bis 18, **dadurch gekennzeichnet, daß** die Pumpensteuerung (212) beim Abschalten des Handstückes (10) die Wasser fördernde Dosierpumpe (188) eine vorgegebene Zeitspanne allein aktiviert, bis der Strömungsweg zwischen der Mischeinrichtung (142, 144) und dem Abgabemittel (58) von Arbeitsflüssigkeit freigespült ist.

20. Einrichtung nach einem der Ansprüche 15 bis 19, **dadurch gekennzeichnet, daß** die Pumpensteuerung (212) die Dosierpumpen (184, 186, 188) beim Einschalten des Handstückes (10) für ein verlängertes Arbeitsintervall einschaltet, bis der Strömungsweg zwischen der Mischeinrichtung (142, 144) und dem Abgabemittel vollständig mit Arbeitsflüssigkeit gefüllt ist.

21. Einrichtung nach einem der Ansprüche 1 bis 20, **ge** **kennzeichnet durch** mindestens eine Aufnahmestation (216, 218) für einen Vorratsbehälter (194), welche eine Entnahmekanüle (232) aufweist, die **durch** einen Verschluß (208) des Vorratsbehälters (194) dicht hindurchführbar ist.

22. Einrichtung nach Anspruch 21, **dadurch gekennzeichnet, daß** die Entnahmekanüle (232) auf einem bewegbaren, vorzugsweise verschwenkbaren Kanülenträger (228) angeordnet ist, welcher zwischen einer mit dem Verschluß (208) des Vorratsbehälters (194) zusammenarbeitenden Arbeitsstellung und einer mit einem Verschluß (258) eines Wasserabgabeteiles (260) zusammenarbeitenden Spülstellung verlagerbar ist.

23. Einrichtung nach Anspruch 22, **dadurch gekennzeichnet, daß** der Kanülenträger (228) jeweils mit einem eine Öffnung eines Gehäuses (182) einer Versorgungseinheit (172) hindurchgeführten Betätigungsteil (222) versehen ist.

24. Einrichtung nach einem der Ansprüche 1 bis 23, **dadurch gekennzeichnet, daß** die Wasserquelle durch einen Wasser-Vorratsbehälter (200) gebildet ist.

25. Einrichtung nach Anspruch 24, **dadurch gekennzeichnet, daß** der Wasser-Vorratsbehälter (200) federnd (278) auf einem Gerätegehäuse (182) abgestützt ist und ein Stellungsgeber (282) vorgesehen ist, welcher mit dem Wasser-Vorratsbehälter (200) oder einem diesen abstützenden Tragelement (270) zusammenarbeitet.

26. Einrichtung nach Anspruch 25, **dadurch gekennzeichnet, daß** das Tragelement (270) für den Wasser-Vorratsbehälter (200) verschwenkbar (272, 274) vom Gerätegehäuse (182) getragen ist und durch eine Feder (278) in eine angehobene Stellung vorgespannt ist, und daß das Tragelement (270) mit dem Stellungsgeber (282) zusammenarbeitet.

27. Einrichtung nach einem der Ansprüche 24 bis 26, **dadurch gekennzeichnet, daß** ein mit einem Ansaugstück (284) versehener Ansaugschlauch (286) von einem Deckel (264) des Gerätegehäuses (182) abgehängt ist, welcher sich über eine Öffnung des Gerätegehäuses (182) erstreckt, durch welche der Wasser-Vorratsbehälter (200) hindurchbewegbar ist.

28. Einrichtung nach einem der Ansprüche 24 bis 27, **dadurch gekennzeichnet, daß** das obere Ende des Wasser-Vorratsbehälters einen vorzugsweise abnehmbaren Schwappring (262) trägt.

29. Einrichtung nach einem der Ansprüche 1 bis 28, **dadurch gekennzeichnet, daß** ein Gerätegehäuse (182) mindestens eine horizontale oder leicht schräg nach unten geneigte Aufnahme (216, 218) für einen Vorratsbehälter (194) aufweist.

30. Einrichtung nach einem der Ansprüche 1 bis 29, **dadurch gekennzeichnet, daß** sie ein Schraubwerkzeug (296) umfaßt, welches über einen Schaft (318) Formschlußmittel (322) trägt, die mit Formschlußmitteln (286) des Düsenkörpers (58) zusammenarbeiten, und daß der Schaft (318) einen verminderten Durchmesser aufweisenden Abschnitt (320) aufweist.

31. Einrichtung nach Anspruch 30, **dadurch gekennzeichnet, daß** zwischen dem Schaftabschnitt (318) und einem Griff (298) des Schraubwerkzeuges (296) eine Ratscheneinrichtung (312, 314) angeordnet ist.

32. Einrichtung nach Anspruch 30 oder 31, **dadurch gekennzeichnet, daß** der Griff (298) als Hohlteil mit einem lösbaren Deckel (304) ausgebildet ist.

33. Einrichtung nach einem der Ansprüche 1 bis 32, **dadurch gekennzeichnet, daß** eine Koppelkörper (18), welcher das Werkzeug (20) trägt, über eine Spannzange (40') mit einer durch den Schwinungserzeuger (50) gekoppelten Sonotrode (36) verbunden ist.

34. Einrichtung nach Anspruch 33, **dadurch** gekennzeichzeichnet, daß die Spannzange (40') ein Positioniermittel (135) trägt, welches mit einem Gegenpositioniermittel (137) des Koppelkörpers (18) in Winkelrichtung zusammenarbeitet.

35. Einrichtung nach Anspruch 33 oder 34, **dadurch gekennzeichnet, daß** ein mit der Spannzange (40') zusammenarbeitender Spannzapfen (129) des Koppelteiles (18) mit einem Fluidkanal (139) versehen ist.

## Claims

1. A dental device for treating tissue with preferably high-frequency mechanical vibrations, with a handpiece (10), which comprises a vibration generator (50) and a tool (20) driven thereby as well as release means (58) for releasing an operating fluid into the vicinity of the tool (20), wherein there is at least one supply receptacle (194) for a concentrate, from which an operating fluid can be manufactured by dilution with water, a water source (200) and a mixing device (142, 144) for mixing concentrate and water, which is connected at its input side to the concentrate supply receptacle (194) and the water source (200) and at its output side to the release means (58) **characterized in that** the mixing device (142, 144) is arranged in the hand-piece (10).

2. A device as claimed in claim 1, **characterized in that** the mixing device comprises a plurality of component ducts (142), which open into a common release duct (144) for operating fluid.

3. A device as claimed in claim 2, **characterized in that** the component ducts (142) extend along generatrices of a cone and the release duct (144) extends along the axis of the cone, the component ducts (142) preferably being uniformly distributed in the circumferential direction.

4. A device as claimed in one of claims 1 to 3, **characterized in that** the mixing device (142, 144) is arranged in a rear housing section (14) of the handpiece (10) constructed as a plug connector element (70).

5. A device as claimed in claim 4, **characterized in that** the plug connector element (70) provided in the rear housing section (14) comprises a valve (154, 156), which is connected downstream of the outlet of the mixing device (142, 144), is normally closed and is forcibly opened by fitting a plug connector element (162) provided on the housing (12).

6. A device as claimed in one of claims 1 to 5, **characterized in that** the release means (58) is mechanically coupled to the vibration generator (50).

7. A device as claimed in claim 6, **characterized in that** the release means (58) is supported by a coupling element (18), which comprises a section driven by the vibration generator (50) and a driving section connected to the tool (20).

8. A device as claimed in claim 6 or 7, **characterized in that** a supply duct (56) conducting the operating fluid to the release means (58) is coupled in a vibration-transmitting manner to the vibration generator (50).

9. A device as claimed in claim 8, **characterized in that** the supply duct (56) is preferably centrally guided through a sonotrode (36) of the handpiece coupled to the vibration generator (50) and driving the tool (20).

10. A device as claimed in claim 8 or 9, **characterized in that** the supply duct (56) is preferably centrally guided through a counterweight (54) coupled to the vibration generator (50).

11. A device as claimed in one of claims 1 to 10, **characterized in that** the release means comprises a nozzle element (58), whose axis intersects the tool (20) in a central section or a section adjacent the free end.

12. A device as claimed in claim 11 in association with claim 8, **characterized in that** the nozzle element (58) is manufactured from a plastics material and is provided at its free end with positive locking means (290), whilst a shaft section (292) is screwed in a self-tapping manner into a threaded bore (294) of the coupling element (18), which is acted upon by the operating fluid.

13. A device as claimed in one of claims 1 to 12, **characterized in that** at least one of the supply receptacles (194) and preferably also the water source (200) is connected via a metering pump (184, 186, 188) to the mixing device (142, 144).

14. A device as claimed in claim 13, **characterized in that** at least a part of the metering pumps (184, 186, 188) are hose pumps.

15. A device as claimed in claim 13 or 14, **characterized in that** there is a control (212) for the metering pumps (184, 186, 188), which actuates the metering pumps intermittently.

16. A device as claimed in claim 15, **characterized in that** the control (212) drives the metering pumps (184, 186, 188) in the reverse direction for a predetermined period of time at the end of an operating interval.

17. A device as claimed in claim 15 or 16, **characterized in that** the pump control (212) adjusts the ratio between ON time and OFF time of the metering pumps (184, 186, 188) in the range between 1:10 and 6:10, preferably from approximately 1:6 to 1:3.

18. A device as claimed in one of claims 15 to 17, **characterized in that** the pump control (212) switches on the metering pumps (184, 186, 188) in succession at a point in time selected according to the viscosity of the respective medium which is to be conveyed in such a manner that the release of the different media into the mixing device (142, 144) occurs simultaneously.

19. A device as claimed in one of claims 15 to 18, **characterized in that** when the handpiece (10) is switched off, the pump control (212) actuates only the metering pump (188) conveying water for a predetermined period of time, until the flow path between the mixing device (142, 144) and the release means (58) is rinsed free of operating fluid.

20. A device as claimed in one of claims 15 to 19, **characterized in that** when the handpiece (10) is switched on, the pump control (212) switches on the metering pumps (184, 186, 188) for an extended operating interval, until the flow path between the mixing device (142, 144) and the release means is completely filled with operating fluid.

21. A device as claimed in one of claims 1 to 20, **characterized in that** there is at least one receiving station (216, 218) for a supply receptacle (194), which comprises an extraction cannula (232), which can be guided in a sealing-tight manner through a closure (208) of the supply receptacle (194).

22. A device as claimed in claim 21, **characterized in that** the extraction cannula (232) is arranged on a displaceable, preferably pivotable cannula support (228), which can be displaced between an operating position cooperating with the closure (208) of the supply receptacle (194) and a rinsing position cooperating with a closure (258) of a water release element (260).

23. A device as claimed in claim 22, **characterized in that** the cannula support (228) is provided in each case with an operating element (222) extending through an aperture of a housing (182) of a supply unit (172).

24. A device as claimed in one of claims 1 to 23, **characterized in that** the water source is formed by a water supply receptacle (200).

25. A device as claimed in claim 24, **characterized in that** the water supply receptacle (200) is resiliently (278) supported on a device housing (182) and a position transmitter (282) is provided, which cooperates with the water supply receptacle (200) or a support element (270) supporting the water supply receptacle.

26. A device as claimed in claim 25, **characterized in that** the support element (270) for the water supply receptacle (200) is pivotably (272, 274) supported by the device housing (182) and is prestressed into a raised position by a spring (278), and the support element (270) cooperates with the position transmitter (282).

27. A device as claimed in one of claims 24 to 26, **characterized in that** a suction hose (286) provided with a suction element (284) is suspended from a cover (264) of the device housing (182), which extends over an opening of the device housing (182), through which the water supply receptacle (200) can be moved.

28. A device as claimed in one of claims 24 to 27, **characterized in that** the upper end of the water supply receptacle supports a preferably removable splash ring (262).

29. A device as claimed in one of claims 1 to 28, **characterized in that** a device housing (182) comprises at least one horizontal or slightly downwardly inclined recess (216, 218) for a supply receptacle (194).

30. A device as claimed in one of claims 1 to 29, **characterized in that** it comprises a screwing tool (296), which via a shaft (318) supports positive locking means (322), which cooperate with positive locking means (286) of the nozzle element (58), and the shaft (318) comprises a section (320) of reduced diameter.

31. A device as claimed in claim 30, **characterized in that** a ratchet device (312, 314) is arranged between the shaft section (318) and a handle (298) of the screwing tool (296).

32. A device as claimed in claim 30 or 31, **characterized in that** the handle (298) is constructed as a hollow element with a detachable cover (304).

33. A device as claimed in one of claims 1 to 32, **characterized in that** a coupling element (18), which supports the tool (20), is connected via a collet (40') to a sonotrode (36) coupled by the vibration generator (50).

34. A device as claimed in claim 33, **characterized in that** the collet (40') supports positioning means (135), which cooperate with counter positioning means (137) of the coupling element (18) in an angular direction.

35. A device as claimed in claim 33 or 34, **characterized in that** a clamping journal (129) of the coupling element (18) cooperating with the collet (40') is provided with a fluid duct (139).

## Revendications

1. Dispositif dentaire pour traiter des tissus de préférence par des vibrations mécaniques à haute fréquence, avec une pièce à main (10) qui présente un générateur de vibrations (50) et un outil (20) entraîné par ce dernier, ainsi que des moyens de délivrance (58) pour délivrer un liquide de travail dans le voisinage de l'outil (20), avec au moins un réservoir (194) pour un produit concentré à partir duquel un liquide de travail peut être fabriqué par dilution avec de l'eau, au moyen d'une source d'eau (200) et d'un équipement mélangeur (142, 144) pour mélanger le produit concentré et l'eau, équipement qui est relié du côté d'entrée au réservoir (194) de produit concentré et à la source d'eau (200) et du coté de sortie au moyen de délivrance (58), **caractérisé en ce que** l'équipement mélangeur (142, 144) est disposé dans la pièce à main (10).

2. Dispositif selon la revendication 1, **caractérisé en ce que** l'équipement mélangeur présente une pluralité de canaux de composants (142), qui débouchent dans un canal commun (144) de délivrance de liquide de travail.

3. Dispositif selon la revendication 2, **caractérisé en ce que** les canaux de composants (142) s'étendent le long de génératrices d'un cône et le canal de délivrance (144) s'étend sur l'axe du cône, les canaux de composants (142) étant de préférence uniformément répartis en direction circonférentielle.

4. Dispositif selon l'une des revendications 1 à 3, **caractérisé en ce que** l'équipement mélangeur (142, 144) est disposé dans une partie arrière de boîtier (14) de la pièce à main (10) qui est réalisée sous forme de partie (70) d'assemblage par emboîtement.

5. Dispositif selon la revendication 4, **caractérisé en ce que** la partie (70) d'assemblage par emboîtement prévue dans la partie arrière de boîtier (14) présente une soupape (154, 156) montée en aval de la sortie de l'équipement mélangeur (142, 144), soupape qui est normalement fermée et qui est ouverte de manière forcée par l'emboîtement d'une partie (162) d'assemblage par emboîtement prévue sur le boîtier (12).

6. Dispositif selon l'une des revendications 1 à 5, **caractérisé en ce que** les moyens de délivrance (58) sont mécaniquement couplés au générateur de vibrations (50).

7. Dispositif selon la revendication 6, **caractérisé en ce que** le moyen de délivrance (58) est porté par un corps de couplage (18) qui présente une partie entraînée par le générateur de vibrations (50) et une partie entraînante reliée à l'outil (20).

8. Dispositif selon la revendication 6 ou 7, **caractérisé en ce qu'**un canal d'alimentation (56) apportant le liquide de travail au moyen de délivrance (58) est couplé en matière de vibrations au générateur de vibrations (50).

9. Dispositif selon la revendication 8, **caractérisé en ce que** le canal d'alimentation (56) est de préférence dirigé centralement à travers une sonotrode (36) de la pièce à main (10) qui est couplée au générateur de vibrations (50) et entraîne l'outil (20).

10. Dispositif selon la revendication 8 ou 9, **caractérisé en ce que** le canal d'alimentation (56) est de préférence dirigé centralement à travers un contrepoids (54) couplé au générateur de vibrations (50).

11. Dispositif selon l'une des revendications 1 à 10, **caractérisé en ce que** le moyen de délivrance comprend un corps de buse (58) dont l'axe coupe l'outil (20) dans une partie centrale ou voisine de l'extrémité libre.

12. Dispositif selon la revendication 11 conjointement avec la revendication 7, **caractérisé en ce que** le corps de buse (58) est fabriqué en une matière plastique et est pourvu à l'extrémité libre de moyens d'engagement positif (290), tandis qu'une partie de tige (292) est vissée avec autotaraudage dans un perçage fileté (294) du corps de couplage (18) qui est alimenté en liquide de travail.

13. Dispositif selon l'une des revendications 1 à 12, **caractérisé en ce qu'**au moins des réservoirs (194) et de préférence également la source d'eau (200) sont reliés à l'équipement mélangeur (142, 144) par l'intermédiaire d'une pompe de dosage (184, 186, 188).

14. Dispositif selon la revendication 13, **caractérisé en ce qu'**au moins les pompes de dosage (184, 186, 188) sont, pour au moins une partie d'entre elles, des pompes tubulaires.

15. Dispositif selon la revendication 13 ou 14, **caractérisé par** une commande (212) pour les pompes de dosage (184, 186, 188) qui active les pompes de dosage de façon intermittente.

16. Dispositif selon la revendication 15, **caractérisé en ce que**, à la fin de chaque intervalle de fonctionnement, la commande (212) active les pompes de dosage (184, 186, 188) en marche arrière pendant une durée prescrite.

17. Dispositif selon la revendication 15 ou 16, **caractérisé en ce que** la commande de pompes (212) règle le rapport entre la durée de MARCHE et la durée d'ARRÊT des pompes de dosage (184, 186, 188) dans la plage entre 1 : 10 et 6 : 10, de préférence d'environ 1 : 6 à 1 : 3.

18. Dispositif selon l'une des revendications 15 à 17, **caractérisé en ce que** la commande de pompes (212) active successivement les pompes de dosage (184, 186, 188), à un instant choisi en fonction de la viscosité du fluide respectif à débiter, de telle sorte que la délivrance des différents fluides dans l'équipement mélangeur (142, 144) intervient simultanément.

19. Dispositif selon l'une des revendications 15 à 18, **caractérisé en ce que** la commande de pompes (212), lors de la désactivation de la pièce à main (10), active seule la pompe de dosage (188) débitant de l'eau pendant une durée prescrite, jusqu'à ce que le liquide de travail présent dans le chemin d'écoulement entre l'équipement mélangeur (142, 144) et le moyen de délivrance (58) soit éliminé par rinçage.

20. Dispositif selon l'une des revendications 15 à 19, **caractérisé en ce que** la commande de pompes (212), lors de l'activation de la pièce à main (10), active les pompes de dosage (184, 186, 188) pendant un intervalle de travail prolongé, jusqu'à ce que le chemin d'écoulement entre l'équipement mélangeur (142, 144) et le moyen de délivrance soit totalement rempli de liquide de travail.

21. Dispositif selon l'une des revendications 1 à 20, **caractérisé par** au moins un poste récepteur (216, 218) pour un réservoir (194), qui présente une canule de prélèvement (232) qui peut être dirigée en étanchéité à travers un obturateur (208) du réservoir (194).

22. Dispositif selon la revendication 21, **caractérisé en ce que** la canule de prélèvement (232) est disposée sur un porte-canule mobile (228), de préférence pivotant, qui peut être déplacé entre une position de travail coopérant avec l'obturateur (208) du réservoir (194) et une position de rinçage coopérant avec un obturateur (258) d'un élément de délivrance d'eau (260).

23. Dispositif selon la revendication 22, **caractérisé en ce que** le porte-canule (228) est respectivement pourvu d'un élément d'actionnement (222) dirigé à travers une ouverture d'un boîtier (182) d'une unité d'alimentation (172).

24. Dispositif selon l'une des revendications 1 à 23, **caractérisé en ce que** la source d'eau est formée par un réservoir d'eau (200).

25. Dispositif selon la revendication 24, **caractérisé en ce que** le réservoir d'eau (200) est soutenu à ressort (278) sur un boîtier d'appareil (182), et il est prévu un transmetteur de position (282) qui coopère avec le réservoir d'eau (200) ou avec un élément porteur (270) soutenant ce dernier.

26. Dispositif selon la revendication 25, **caractérisé en ce que** l'élément porteur (270) pour le réservoir d'eau (200) est porté avec possibilité de pivotement (272, 274) par le boîtier d'appareil (182) et est précontraint par un ressort (278) dans une position soulevée, et **en ce que** l'élément porteur (270) coopère avec le transmetteur de position (282).

27. Dispositif selon l'une des revendications 24 à 26, **caractérisé en ce qu'**un flexible d'aspiration (286) pourvu d'un embout d'aspiration (283) dépend d'un couvercle (264) du boîtier d'appareil (182) qui s'étend sur une ouverture du boîtier d'appareil (182) à travers laquelle peut être déplacé le réservoir d'eau (200).

28. Dispositif selon l'une des revendications 24 à 27, **caractérisé en ce que** l'extrémité supérieure du réservoir d'eau porte une bague anti-ballottement (262) de préférence amovible.

29. Dispositif selon l'une des revendications 1 à 28, **caractérisé en ce qu'**un boîtier d'appareil (182) présente au moins une partie réceptrice (216, 218) pour un réservoir (194), horizontale ou inclinée légèrement en oblique vers le bas.

30. Dispositif selon l'une des revendications 1 à 29, **caractérisé en ce qu'**il comprend un outil de vissage (296) qui porte à l'aide d'une tige (318) des moyens d'engagement positif (322) qui coopèrent avec des moyens d'engagement positif (286) du corps de buse (58), et **en ce que** la tige (318) présente une partie (320) de diamètre réduit.

31. Dispositif selon la revendication 30, **caractérisé en ce qu'**un mécanisme à rochet (312, 314) est disposé entre la partie de tige (318) et une poignée (298) de l'outil de vissage (296).

32. Dispositif selon la revendication 30 ou 31, **caractérisé en ce que** la poignée (298) est réalisée sous la forme d'une pièce creuse pourvue d'un couvercle amovible (304).

33. Dispositif selon l'une des revendications 1 à 32, **caractérisé en ce qu'**un corps de couplage (18), qui porte l'outil (20), est relié par l'intermédiaire d'une pince de serrage (40') à une sonotrode (36) couplée au générateur de vibrations (50).

34. Dispositif selon la revendication 33, **caractérisé en ce que** la pince de serrage (40') porte un moyen de positionnement (135) qui coopère en direction angulaire avec un moyen de positionnement complémentaire (137) du corps de couplage (18).

35. Dispositif selon la revendication 33 ou 34, **caractérisé en ce qu'**un tenon de serrage (129) de l'élément de couplage (18) qui coopère avec la pince de serrage (40') est pourvu d'un canal de fluide (139).
